# EUROPEAN PATENT SPECIFICATION

(11) **EP 4 383 110 B1**
(45) Date of publication and mention of the grant of the patent: **10.12.2025**
(21) Application number: 22859966.8
(22) Date of filing: 25.05.2022
(51) Int. Cl.: G06F 21/62, G06F 3/06, H04L 9/32

(54) **DATA PROCESSING METHOD AND RELATED APPARATUS**
DATENVERARBEITUNGSVERFAHREN UND ZUGEHÖRIGE VORRICHTUNG
PROCÉDÉ DE TRAITEMENT DE DONNÉES ET APPAREIL ASSOCIÉ

(30) Priority: 25.08.2021 CN 202110983634
(43) Date of publication of application: 12.06.2024
(73) Proprietor: Shenzhen Yinwang Intelligent Technologies Co., Ltd., Shenzhen, Guangdong 518129 (CN)
(72) Inventor: CAO, Jianlong, Shenzhen, Guangdong 518129 (CN); SHANG, Yu, Shenzhen, Guangdong 518129 (CN); MA, Wanwangying, Shenzhen, Guangdong 518129 (CN); LI, Jiangqi, Shenzhen, Guangdong 518129 (CN); FANG, Rui, Shenzhen, Guangdong 518129 (CN)
(74) Representative: Pfenning, Meinig & Partner mbB
(86) International application number: PCT/CN2022/094994
(87) International publication number: WO 2023/024618

(56) References cited:
- WO-A1-2020/010192
- CN-A- 102 963 219
- CN-A- 112 532 574
- US-A1- 2017 278 320
- LO BELLO LUCIA ET AL: "A Perspective on IEEE Time-Sensitive Networking for Industrial Communication and Automation Systems", PROCEEDINGS OF THE IEEE, IEEE. NEW YORK, US, vol. 107, no. 6, 1 June 2019 (2019-06-01), pages 1094 - 1120, XP011725972, ISSN: 0018-9219, [retrieved on 20190529], DOI: 10.1109/JPROC.2019.2905334

## Description

### TECHNICAL FIELD

This application relates to the field of intelligent vehicle technologies, and in particular, to a data processing method and a related apparatus.

### BACKGROUND

With the development of modern information technologies, a quantity of electronic products in a vehicle is increasing, and the complexity of the vehicle is increasing. To adapt to a development trend in the vehicle field, a vehicle needs to implement more functions, and a quantity of electronic control elements in a system for implementing an electronic control function in the vehicle, especially electronic control units (electronic control unit, ECU) located inside vehicle components, is also increasing.

Generally, one or more ECUs are disposed in each vehicle component that has an electronic control function in a vehicle, and each ECU has functions such as a control function and a computing function. In a normal driving process of a vehicle, an ECU in the vehicle usually needs to obtain various types of data of the vehicle in the driving process, for example, data such as a driving speed and a driving location of the vehicle.

After the vehicle runs for a period of time, the ECU in the vehicle usually stores various types of data generated in the driving process of the vehicle, and the data stored in the ECU in the vehicle is private data of a vehicle owner. In some cases, the vehicle owner usually wants to delete some private data stored in the vehicle to avoid privacy leakage. However, a current vehicle does not support fine-grained deletion of data in each ECU in the vehicle by a vehicle owner. The vehicle owner can delete data of components in the entire vehicle only in a vehicle formatting manner, and the deletion of the data of the components in the entire vehicle affects normal driving of the vehicle by the vehicle owner.

Therefore, currently, a method that can effectively manage in-vehicle data is urgently needed. WO 2020/010192 A1 discloses a shadow file system configured to store private user data to perform operations including: storing the private user data in the shadow file system; receiving instructions to delete or make available for download the private user data stored in the shadow file system; and performing operations to delete or make available for download all of the private user data stored in the shadow file system.
The following publication provides an overview of Time-Sensitive Networking (TSN): LO BELLO LUCIA ET AL: "A Perspective on IEEE Time-Sensitive Networking for Industrial Communication and Automation Systems", PROCEEDINGS OF THE IEEE, IEEE. NEW YORK, US, vol.107, no. 6, 1June2019 (2019-06-01), pages 1094-1120, XP011725972, ISSN: 0018-9219, DOI: 10.1109/JPROC.2019.2905334

### SUMMARY

This application provides a data processing method, so that fine-grained management of data can be implemented for components in a vehicle, so that specific data in the vehicle can be deleted conveniently, and leakage of private data in the vehicle is avoided. The invention as claimed is defined in the independent claims.

A first aspect of this application provides a data processing method. The method is applied to a vehicle including a controller and a plurality of ECUs. The vehicle may be, for example, an intelligent vehicle. The method includes: The controller receives a data request message from a first ECU, where the first ECU is any one of the plurality of ECUs, and the data request message is used to request to obtain sensor data. The controller sends a response message to the first ECU, where the response message indicates the first ECU to obtain the sensor data. Based on the response message, the first ECU can obtain corresponding sensor data.

The controller generates mark information based on the data request message, where the mark information records request information for the sensor data. For example, the request information for the sensor data includes a requester of the sensor data, a request time of the sensor data, and content of the sensor data. For example, the request information for the sensor data may be as follows: The first ECU requests camera data at xx:xx on xx/xx (month/day).

If the vehicle triggers deletion of the sensor data in the first ECU, the controller sends a first data deletion instruction to the first ECU based on the mark information, where the first data deletion instruction indicates the first ECU to delete the sensor data.

In this solution, when a plurality of ECUs in a vehicle need to obtain sensor data, the plurality of ECUs send a data request to a controller, and the controller records information about requesting the sensor data by the ECUs. In this way, when deletion of specific sensor data is triggered, the controller may determine, based on the recorded information, an ECU that obtains the sensor data, and send a data deletion instruction to the ECU, thereby implementing fine-grained management of in-vehicle data.

In a possible implementation, that the vehicle triggers deletion of the sensor data in the first ECU includes: The controller determines, based on the mark information and a preset data retention period, that the sensor data in the first ECU expires. The preset data retention period may be a storage period of in-vehicle data. When a storage time of the data reaches the storage period (that is, the data expires), the data needs to be deleted.

Alternatively, the controller obtains a second data deletion instruction triggered by a user, where the second data deletion instruction indicates to delete the sensor data in the first ECU. For example, the user may select, on a human-machine interface of the vehicle, data that needs to be deleted, to trigger the second data deletion instruction.

In this solution, when the data in the ECU expires or the user triggers deletion of the data in the ECU, the controller is triggered to send the data deletion instruction to the ECU, to implement data deletion, and implement fine-grained management of in-vehicle data.

In a possible implementation, the response message includes information about a sensor, and the information about the sensor is used by the first ECU to establish a communication connection with the sensor, so that the first ECU obtains the sensor data from the sensor.

In this solution, a connection between an ECU and a sensor is managed and controlled by a controller, so that the controller can manage and control the ECU to obtain sensor data, thereby implementing fine-grained management of in-vehicle data.

In a possible implementation, when the first ECU obtains the sensor data by establishing the communication connection with the sensor, the first data deletion instruction may indicate the first ECU to disconnect the communication connection with the sensor.

For example, when the user modifies permission of an application and the first ECU no longer has permission to access the sensor data, the controller may send the first data deletion instruction to the first ECU. The first data deletion instruction indicates the first ECU to delete the sensor data and indicates the first ECU to disconnect the communication connection with the sensor.

In this solution, when permission of the ECU is changed and the ECU cannot access the sensor data, the first data deletion instruction indicates the ECU to disconnect the communication connection between the ECU and the sensor, so that the ECU can no longer obtain the sensor data, thereby implementing precise management and control of in-vehicle data.

In a possible implementation, before that the controller sends a response message to the first ECU, the method further includes: The controller determines, according to a preset permission configuration policy, that the first ECU has permission to access the sensor data. The permission configuration policy may be set by a user through a human-machine interface in the vehicle or a remote terminal. Alternatively, the permission configuration policy may be preset before the vehicle is delivered.

In a possible implementation, for the controller in the vehicle, an untrusted ECU in the vehicle, a third-party device, and a cloud server are all untrusted devices, that is, devices that are not trusted by the controller. In a process of performing data interaction with an untrusted device, the controller needs to store evidence of data interaction, to ensure reliability of data interaction.

The method further includes: The controller receives address information sent by an untrusted device, where the untrusted device includes a second ECU or a server, the second ECU is an untrusted ECU in the plurality of ECUs, the address information indicates an address space that is in the untrusted device and that is used to store to-be-transmitted data, and the address information is determined by the untrusted device based on a size of the to-be-transmitted data.

The controller generates a first data credential based on the address information and the to-be-transmitted data, where the first data credential uniquely indicates the to-be-transmitted data. The controller sends the first data credential to the untrusted device. The controller receives a first signature result sent by the untrusted device, where the first signature result is obtained by signing the first data credential by the untrusted device. The controller controls transmission of the to-be-transmitted data to the untrusted device.

In this solution, before data is transmitted to an untrusted device, the controller obtains address information that is returned by the untrusted device and that is used to store the to-be-transmitted data, and generates a data credential based on the address information and the to-be-transmitted data. The data is transmitted to the untrusted device after the data credential is signed by using the untrusted device. The controller stores the data credential signed by using the untrusted device, so that evidence of data transmission to the untrusted device can be provided, thereby eliminating a threat that the untrusted device repudiates, after receiving the data, that the untrusted device does not receive the data, and improving reliability of data transmission.

There may be a plurality of implementations in which the controller may control transmission of the to-be-transmitted data to the untrusted device.

In a possible implementation, if the untrusted device is the second ECU and the second ECU requests to obtain the sensor data from the controller, the controller may indicate, by returning information about a sensor to the second ECU, the second ECU to obtain the sensor data from the sensor. That is, the controller controls transmission of the to-be-transmitted data to the untrusted device by returning, to the untrusted device, information about establishment with the sensor.

In another possible implementation, if the untrusted device is the second ECU or the server and the to-be-transmitted data is located in storage space of the controller, the controller may send the data in the storage space of the controller to the second ECU or the server, to control transmission of the to-be-transmitted data to the untrusted device.

In still another possible implementation, if the untrusted device is a server and the to-be-transmitted data is located on a component other than the controller, the controller may communicate with the component that stores the to-be-transmitted data, to indicate the component to transmit the to-be-transmitted data to the server.

In a possible implementation, the first data credential includes the address information and one or more of a digest value of the to-be-transmitted data, a file locator of the to-be-transmitted data, and a timestamp of the to-be-transmitted data.

In a possible implementation, the method further includes: The controller generates a second data credential based on to-be-deleted data. The controller sends a third data deletion instruction to an untrusted device, where the untrusted device includes a third ECU or a server, the third ECU is an untrusted ECU in the plurality of ECUs, the third data deletion instruction includes the second data credential, and the third data deletion instruction indicates to delete the to-be-deleted data. The controller obtains a second signature result returned by the untrusted device, where the second signature result is obtained by signing the second data credential by the server, and the second signature result indicates that the untrusted device has deleted the to-be-deleted data.

In this solution, before the controller indicates the untrusted device to delete the data, the controller generates the data credential based on the to-be-deleted data. When indicating the untrusted device to delete the data, the controller sends the data credential to the untrusted device, so that the controller can obtain a result obtained by signing the data credential by the untrusted device.

The controller stores a result obtained by signing the data credential by the untrusted device, so that the controller can provide evidence that the untrusted device confirms data deletion, thereby eliminating a threat that the untrusted device repudiates that no data deletion instruction is received, and improving reliability of data transmission.

A second aspect of this application provides a data processing method. The method is applied to a vehicle including a controller and a plurality of electronic control units ECUs. The method includes: A first ECU sends a data request message to the controller, where the first ECU is any one of the plurality of ECUs, and the data request message is used to request to obtain sensor data. The first ECU receives a response message from the controller, where the response message indicates the first ECU to obtain the sensor data. The first ECU obtains the sensor data based on the response message. If the vehicle triggers deletion of the sensor data in the first ECU, the first ECU receives a first data deletion instruction from the controller, and deletes the sensor data in the first ECU based on the first data deletion instruction.

In a possible implementation, that the first ECU obtains the sensor data based on the response message includes: The first ECU establishes, based on information about a sensor, a communication connection with the sensor, where response information includes the information about the sensor. The first ECU obtains the sensor data from the sensor based on the communication connection.

In a possible implementation, the first data deletion instruction indicates the first ECU to disconnect the communication connection with the sensor.

In a possible implementation, the method further includes: If the first ECU is an untrusted device, the first ECU sends address information to the controller, where the address information indicates an address space that is in the first ECU and that is used to store to-be-transmitted data, and the address information is determined by the first ECU based on a size of the to-be-transmitted data. The first ECU receives a first data credential sent by the controller, where the first data credential is generated based on the address information and the to-be-transmitted data. The first ECU signs the first data credential to obtain a first signature result. The first ECU sends the first signature result to the controller. The first ECU receives the to-be-transmitted data transmitted by the controller.

In a possible implementation, the first data credential includes the address information and one or more of a digest value of the to-be-transmitted data, a file locator of the to-be-transmitted data, and a timestamp of the to-be-transmitted data.

In a possible implementation, the method further includes: If the first ECU is an untrusted device, the first ECU receives a third data deletion instruction sent by the controller, where the third data deletion instruction includes a second data credential, and the second data credential is generated by the controller based on to-be-deleted data. The first ECU signs the second data credential to obtain a second signature result. The first ECU sends the second signature result to the controller, and deletes the to-be-deleted data, where the second signature result indicates that the untrusted device has deleted the to-be-deleted data.

A non-claimed third aspect of this application provides a controller. The controller is located in a vehicle. The vehicle further includes a plurality of ECUs. The controller includes a transceiver unit and a processing unit.

The transceiver unit is configured to receive a data request message from a first ECU, where the first ECU is any one of the plurality of ECUs, and the data request message is used to request to obtain sensor data.

The transceiver unit is further configured to send a response message to the first ECU, where the response message indicates the first ECU to obtain the sensor data.

The processing unit is configured to generate mark information based on the data request message, where the mark information records request information for the sensor data.

If the vehicle triggers deletion of the sensor data in the first ECU, the transceiver unit is further configured to send a first data deletion instruction to the first ECU based on the mark information, where the first data deletion instruction indicates the first ECU to delete the sensor data.

In a possible implementation, the request information for the sensor data includes a requester of the sensor data, a request time of the sensor data, and content of the sensor data.

In a possible implementation, the processing unit is further configured to determine, based on the mark information and a preset data retention period, that the sensor data in the first ECU expires; or the transceiver unit is further configured to obtain a second data deletion instruction triggered by a user, where the second data deletion instruction indicates to delete the sensor data in the first ECU.

In a possible implementation, the response message includes information about a sensor, and the information about the sensor is used by the first ECU to establish a communication connection with the sensor, so that the first ECU obtains the sensor data from the sensor.

In a possible implementation, the first data deletion instruction indicates the first ECU to disconnect the communication connection with the sensor.

In a possible implementation, the processing unit is further configured to determine, according to a preset permission configuration policy, that the first ECU has permission to access the sensor data.

In a possible implementation, the transceiver unit is further configured to receive address information sent by an untrusted device, where the untrusted device includes a second ECU or a server, the second ECU is an untrusted ECU in the plurality of ECUs, the address information indicates an address space that is in the untrusted device and that is used to store to-be-transmitted data, and the address information is determined by the untrusted device based on a size of the to-be-transmitted data. The processing unit is further configured to generate a first data credential based on the address information and the to-be-transmitted data, where the first data credential uniquely indicates the to-be-transmitted data. The transceiver unit is further configured to send the first data credential to the untrusted device. The transceiver unit is further configured to receive a first signature result sent by the untrusted device, where the first signature result is obtained by signing the first data credential by the untrusted device. The transceiver unit is further configured to control transmission of the to-be-transmitted data to the untrusted device.

In a possible implementation, the first data credential includes the address information and one or more of a digest value of the to-be-transmitted data, a file locator of the to-be-transmitted data, and a timestamp of the to-be-transmitted data.

In a possible implementation, the processing unit is further configured to generate a second data credential based on to-be-deleted data. The transceiver unit is further configured to send a third data deletion instruction to an untrusted device, where the untrusted device includes a third ECU or a server, the third ECU is an untrusted ECU in the plurality of ECUs, the third data deletion instruction includes the second data credential, and the third data deletion instruction indicates to delete the to-be-deleted data. The transceiver unit is further configured to obtain a second signature result returned by the untrusted device, where the second signature result is obtained by signing the second data credential by the server, and the second signature result indicates that the untrusted device has deleted the to-be-deleted data.

A non-claimed fourth aspect of this application provides a first ECU. The first ECU is located in a vehicle. The vehicle includes a controller and a plurality of ECUs. The first ECU is any one of the plurality of ECUs. The first ECU includes a transceiver unit and a processing unit. The transceiver unit is configured to send a data request message to the controller, where the data request message is used to request to obtain sensor data. The transceiver unit is configured to receive a response message from the controller, where the response message indicates the first ECU to obtain the sensor data. The processing unit is configured to obtain the sensor data based on the response message. If the vehicle triggers deletion of the sensor data in the first ECU, the transceiver unit is further configured to: receive a first data deletion instruction from the controller, and delete the sensor data in the first ECU based on the first data deletion instruction.

In a possible implementation, the transceiver unit is further configured to establish, based on information about a sensor, a communication connection with the sensor, where response information includes the information about the sensor. The transceiver unit is further configured to obtain the sensor data from the sensor based on the communication connection.

In a possible implementation, the first data deletion instruction indicates the first ECU to disconnect the communication connection with the sensor.

In a possible implementation, if the first ECU is an untrusted device, the transceiver unit is further configured to send address information to the controller, where the address information indicates an address space that is in the first ECU and that is used to store to-be-transmitted data, and the address information is determined by the first ECU based on a size of the to-be-transmitted data. The transceiver unit is further configured to receive a first data credential sent by the controller, where the first data credential is generated based on the address information and the to-be-transmitted data. The processing unit is further configured to sign the first data credential to obtain a first signature result. The transceiver unit is further configured to send the first signature result to the controller. The transceiver unit is further configured to receive the to-be-transmitted data transmitted by the controller.

In a possible implementation, the first data credential includes the address information and one or more of a digest value of the to-be-transmitted data, a file locator of the to-be-transmitted data, and a timestamp of the to-be-transmitted data.

In a possible implementation, if the first ECU is an untrusted device, the transceiver unit is further configured to receive a third data deletion instruction sent by the controller, where the third data deletion instruction includes a second data credential, and the second data credential is generated by the controller based on to-be-deleted data. The processing unit is further configured to sign the second data credential to obtain a second signature result. The transceiver unit is further configured to: send the second signature result to the controller, and delete the to-be-deleted data, where the second signature result indicates that the untrusted device has deleted the to-be-deleted data.

A non-claimed fifth aspect of this application provides a controller. The controller includes a memory and a processor. The memory stores code. The processor is configured to execute the code. When the code is executed, the controller performs the method according to any one of the implementations of the first aspect.

A sixth aspect of this application provides an ECU. The ECU includes a memory and a processor. The memory stores code. The processor is configured to execute the code. When the code is executed, the ECU performs the method according to any one of the implementations of the first aspect.

A seventh aspect of this application provides a vehicle, including a controller and a plurality of ECUs. The controller is separately connected to the plurality of ECUs. The controller is the controller according to the fifth aspect, and any ECU in the plurality of ECUs is the ECU according to the sixth aspect.

An non-claimed eighth aspect of this application provides a computer-readable storage medium. The computer-readable storage medium stores a computer program. When the computer program runs on a computer, the computer is enabled to perform the method according to any one of the implementations of the first aspect or the second aspect.

A non-claimed ninth aspect of this application provides a computer program product. When the computer program product runs on a computer, the computer is enabled to perform the method according to any one of the implementations of the first aspect or the second aspect.

A non-claimed tenth aspect of this application provides a chip, including one or more processors. Some or all of the processors are configured to read and execute a computer program stored in a memory, to perform the method according to any possible implementation of any one of the foregoing aspects.

Optionally, the chip includes the memory, and the memory and the processor are connected to the memory by using a circuit or a wire. Optionally, the chip further includes a communications interface, and the processor is connected to the communications interface. The communications interface is configured to receive data and/or information that needs to be processed. The processor obtains the data and/or information from the communications interface, processes the data and/or information, and outputs a processing result through the communications interface. The communications interface may be an input/output interface. The method according to this application may be implemented by one chip, or may be cooperatively implemented by a plurality of chips.

### BRIEF DESCRIPTION OF DRAWINGS

FIG. 1 is a schematic diagram of a structure of a vehicle 100 according to an embodiment of this application;
FIG. 2 is another schematic diagram of a structure of a vehicle according to an embodiment of this application;
FIG. 3 is a schematic diagram of a structure of a computer system 101 in a vehicle according to an embodiment of this application;
FIG. 4 is a schematic flowchart of a data processing method 400 according to an embodiment of this application;
FIG. 5 is a schematic diagram of a human-machine interface of a vehicle according to an embodiment of this application;
FIG. 6 is a schematic flowchart of a data processing method 600 according to an embodiment of this application;
FIG. 7 is a schematic diagram of a system architecture of a vehicle according to an embodiment of this application;
FIG. 8 is a schematic diagram of interaction between a controller and an ECU according to an embodiment of this application;
FIG. 9 is a schematic diagram of a structure of a data handling center according to an embodiment of this application;
FIG. 10 is a schematic flowchart of a data processing method 1000 according to an embodiment of this application;
FIG. 11 is a schematic diagram of interaction between a controller and an untrusted device according to an embodiment of this application;
FIG. 12 is a schematic flowchart of exchanging a data credential 1 between an ECU and a controller according to an embodiment of this application;
FIG. 13 is a schematic diagram of a structure of a data credential 1 according to an embodiment of this application;
FIG. 14 is a schematic diagram of a structure of a controller 1400 according to an embodiment of this application;
FIG. 15 is a schematic diagram of a structure of a first ECU 1500 according to an embodiment of this application; and
FIG. 16 is a schematic diagram of a structure of a computer-readable storage medium 1600 according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application.

A data processing method provided in embodiments of this application may be applied to various vehicle-related scenarios, for example, a scenario in which a vehicle normally plans a driving path for the vehicle, monitors a vehicle status, or remotely controls the vehicle.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

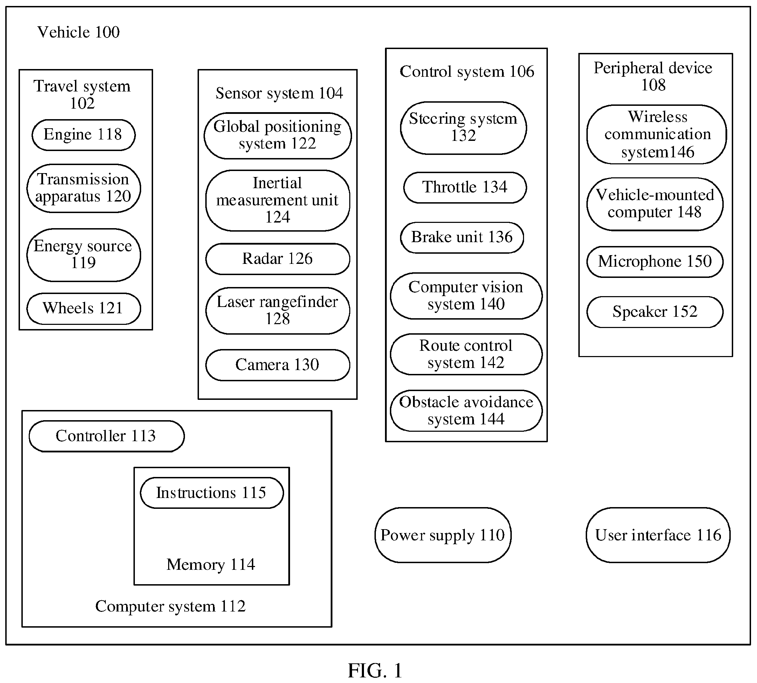

For ease of understanding this solution, in embodiments of this application, a structure of a vehicle provided in this application is first described with reference to FIG. 1. FIG. 1 is a schematic diagram of a structure of a vehicle 100 according to an embodiment of this application.

In an embodiment, the vehicle 100 may be configured to be in a fully or partially autonomous driving mode. For example, the vehicle 100 in an autonomous driving mode may control the vehicle 100, and may determine a current status of the vehicle and an ambient environment of the vehicle through a manual operation, determine possible behavior of at least one another vehicle in the ambient environment, determine a confidence level corresponding to a possibility that the another vehicle performs the possible behavior, and control the vehicle 100 based on determined information. When the vehicle 100 is in the autonomous driving mode, the vehicle 100 may be set to operate without interacting with a person.

The vehicle 100 may include various subsystems, such as a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of elements. For example, each subsystem includes a plurality of ECUs. In addition, each subsystem and component of the vehicle 100 may be interconnected in a wired or wireless manner.

The travel system 102 may include a component that provides power for the vehicle 100 to move. In an embodiment, the travel system 102 may include an engine 118, an energy source 119, a transmission apparatus 120, and wheels/tires 121. The engine 118 may be an internal combustion type engine, a motor, an air compression engine, or another type of engine combination, for example, a hybrid engine including a gasoline engine and a motor, or a hybrid engine including an internal combustion type engine and an air compression engine. The engine 118 converts the energy source 119 into mechanical energy.

Examples of the energy source 119 include gasoline, diesel, other oil-based fuels, propane, other compressed gas-based fuels, anhydrous alcohol, solar panels, batteries, or other power sources. The energy source 119 may also provide energy to another system of the vehicle 100.

The transmission apparatus 120 may transmit mechanical power from the engine 118 to the wheels 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 may include several sensors that can sense information about the ambient environment of the vehicle 100. For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an engine oil thermometer) of an internal system of the monitored vehicle 100. Sensor data from one or more of these sensors can be used to detect an object and corresponding features (a position, a shape, a direction, a speed, and the like) of the object. Such detection and recognition are key functions of a safe operation of the autonomous driving vehicle 100.

The positioning system 122 may be configured to estimate a geographical location of the vehicle 100. The IMU 124 is configured to sense a location and an orientation change of the vehicle 100 based on inertial acceleration. In an embodiment, the IMU 124 may be a combination of an accelerometer and a gyroscope.

The radar 126 may sense an object in the ambient environment of the vehicle 100 by using a radio signal. In some embodiments, in addition to sensing an object, the radar 126 may further be configured to sense a speed and/or a moving direction of the object.

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera.

The control system 106 controls operations of the vehicle 100 and components of the vehicle 100. The control system 106 may include various components, including a steering system 132, a throttle 134, a brake unit 136, a sensor fusion algorithm 138, a computer vision system 140, a route control system 142, and an obstacle avoidance system 144.

The steering system 132 may be operated to adjust a moving direction of the vehicle 100. For example, in an embodiment, the steering system 132 may be a steering wheel system.

The throttle 134 is configured to control an operating speed of the engine 118 and further control a speed of the vehicle 100.

The brake unit 136 is configured to control the vehicle 100 to decelerate. The brake unit 136 may use friction to slow down the wheels 121. In another embodiment, the brake unit 136 may convert kinetic energy of the wheels 121 into a current. The brake unit 136 may alternatively use another form to reduce a rotation speed of the wheels 121, to control the speed of the vehicle 100.

The computer vision system 140 may operate to process and analyze an image captured by the camera 130, to identify an object and/or a feature in the ambient environment of the vehicle 100. The object and/or the feature may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to draw a map for an environment, track an object, estimate a speed of the object, and the like.

The route control system 142 is configured to determine a travel route of the vehicle 100. In some embodiments, the route control system 142 may determine the travel route of the vehicle 100 with reference to data from the sensor 138, the GPS 122, and one or more predetermined maps.

The obstacle avoidance system 144 is configured to recognize, evaluate, and avoid or bypass, in another manner, a potential obstacle in an environment of the vehicle 100.

Certainly, in an example, the control system 106 may add or alternatively include components other than those shown and described. Alternatively, the control system 106 may delete some of the foregoing components.

The vehicle 100 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for a user of the vehicle 100 to interact with the user interface 116. For example, the vehicle-mounted computer 148 may provide information for the user of the vehicle 100. The user interface 116 may further operate the vehicle-mounted computer 148 to receive a user input. The vehicle-mounted computer 148 may perform operations through a touchscreen. In another case, the peripheral device 108 may provide a means for the vehicle 100 to communicate with another device located in the vehicle. For example, the microphone 150 may receive audio (for example, a voice command or another audio input) from the user of the vehicle 100. Likewise, the speaker 152 may output audio to the user of the vehicle 100.

The wireless communication system 146 may wirelessly communicate with one or more devices directly or through a communication network. For example, the wireless communication system 146 may perform communication through a 3G cellular network such as CDMA, EVD0, or GSM/GPRS, perform communication through a 4G cellular network such as LTE, or 5G cellular network communication. The wireless communication system 146 may communicate with a wireless local area network (wireless local area network, WLAN) through Wi-Fi. In some embodiments, the wireless communication system 146 may directly communicate with a device by using an infrared link, Bluetooth, or ZigBee. Other wireless protocols, for example, various vehicle communication systems, such as the wireless communication system 146, may include one or more dedicated short-range communications (dedicated short-range communications, DSRC) devices, and these devices may include public and/or private data communication between the vehicle and/or roadside stations.

The power supply 110 may provide power to various components of the vehicle 100. In an embodiment, the power supply 110 may be a rechargeable lithium-ion or lead-acid battery. One or more battery packs of such a battery may be configured as the power supply to supply power to the components of the vehicle 100. In some embodiments, the power supply 110 and the energy source 119 may be implemented together, for example, in some pure electric vehicles.

Some or all of functions of the vehicle 100 are controlled by the computer system 112. The computer system 112 may include at least one processor 113. The processor 113 executes instructions 115 stored in a non-transitory computer-readable medium such as a data storage apparatus 114. The computer system 112 may alternatively be a plurality of computing devices that control an individual component or a subsystem of the vehicle 100 in a distributed manner.

The processor 113 may be any conventional processor, for example, a commercially available CPU. Alternatively, the processor may be a dedicated device such as an ASIC or another hardware-based processor. Although FIG. 1 functionally illustrates the processor, the memory, and other components of the computer 110 in a same block, a person of ordinary skill in the art should understand that the processor, the computer, or the memory may actually include a plurality of processors, computers, or memories that may or may not be stored in a same physical housing.

For example, the memory may be a hard disk drive, or another storage medium located in a housing different from that of the computer 110. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

In some embodiments, the data storage apparatus 114 may include the instructions 115 (for example, program logic), and the instructions 115 may be executed by the processor to perform various functions of the vehicle 100, including the functions described above. The data storage apparatus 114 may also include additional instructions, for example, instructions for sending data to, receiving data from, interacting with, and/or controlling one or more of the travel system 102, the sensor system 104, the control system 106, and the peripheral device 108.

In addition to the instructions 115, the data storage apparatus 114 may further store data, such as a road map, route information, a location, a direction, a speed, and other vehicle data of the vehicle, and other information. Such information may be used by the vehicle 100 and the computer system 112 when the vehicle 100 operates in an autonomous mode, a semi-autonomous mode, and/or a manual mode.

The user interface 116 is configured to provide information to or receive information from the user of the vehicle 100. Optionally, the user interface 116 may include one or more input/output devices in a set of peripheral devices 108, for example, the wireless communication system 146, the vehicle-mounted computer 148, the microphone 150, and the speaker 152.

The computer system 112 may control the functions of the vehicle 100 based on inputs received from the various subsystems (for example, the travel system 102, the sensor system 104, and the control system 106) and from the user interface 116. For example, the computer system 112 may access and use input from the control system 106 to control the steering unit 132 to avoid an obstacle detected by the sensor system 104 and the obstacle avoidance system 144. In some embodiments, the computer system 112 may operate to provide control on the vehicle 100 and the subsystems of the vehicle 100 in many aspects.

Optionally, one or more of the foregoing components may be installed separately from or associated with the vehicle 100. For example, the data storage apparatus 114 may be partially or completely separated from the vehicle 1100. The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on this embodiment of this application.

An autonomous driving vehicle traveling on a road, for example, the vehicle 100, may identify an object in an ambient environment of the autonomous driving vehicle, to determine to adjust a current speed. The object may be another vehicle, a traffic control device, or another type of object. In some examples, each identified object may be considered independently, and based on features of each object, such as a current speed of the object, acceleration of the object, and a spacing between the object and the vehicle, may be used to determine the speed to be adjusted by the autonomous driving vehicle.

Optionally, the autonomous driving vehicle 100 or a computing device (such as the computer system 112, the computer vision system 140, and the data storage apparatus 114 in FIG. 1) associated with the autonomous driving vehicle 100 may predict behavior of the identified object based on a characteristic of the identified object and a status (for example, traffic, rain, or ice on a road) of the ambient environment. Optionally, all identified objects depend on behavior of each other, and therefore all the identified objects may be considered together to predict behavior of a single identified object. The vehicle 100 can adjust the speed of the vehicle 100 based on the predicted behavior of the identified object.

In other words, the autonomous vehicle can determine, based on the predicted behavior of the object, a stable state to which the vehicle needs to be adjusted (for example, acceleration, deceleration, or stop). In this process, another factor may also be considered to determine the speed of the vehicle 100, for example, a horizontal location of the vehicle 100 on a road on which the vehicle travels, curvature of the road, and proximity between a static object and a dynamic object.

In addition to providing an instruction for adjusting the speed of the autonomous vehicle, the computing device may further provide an instruction for modifying a steering angle of the vehicle 100, so that the autonomous vehicle follows a given track and/or maintains safe lateral and longitudinal distances between the autonomous vehicle and an object (for example, a car in an adjacent lane on the road) near the autonomous vehicle.

The vehicle 100 may be a sedan, a truck, a motorcycle, a bus, an entertainment vehicle, an amusement park vehicle, a construction device, a tram, a golf cart, a train, or the like. This is not particularly limited in embodiments of this application.

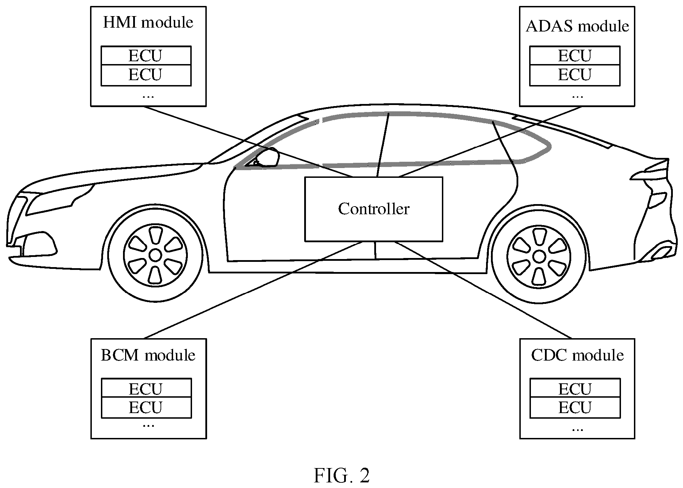

FIG. 2 is another schematic diagram of a structure of a vehicle according to an embodiment of this application. As shown in FIG. 2, a vehicle includes a controller and a plurality of modules. The controller is separately connected to the plurality of modules, and each module includes one or more ECUs. For example, the plurality of modules may include, for example, a body control module (body control module, BCM), a human-machine interface (human-machine interface, HMI) module, and an advanced driver-assistance system (advanced driver-assistance system, ADAS) module, a smart cockpit domain controller (cockpit domain controller, CDC) module, or the like.

It may also be understood that one controller may manage or control one or more ECUs. The ECU may be an ECU in the systems described in FIG. 1. It may be understood that the vehicle may include a plurality of control modules. Each module includes or is connected to one or more ECUs, for example, the travel system 102, the sensor system 104, the steering system 132, the throttle 134, and the brake unit 136. Each module includes one or more ECUs, configured to control an engine, a wheel, steering, a throttle, braking, or the like of the vehicle.

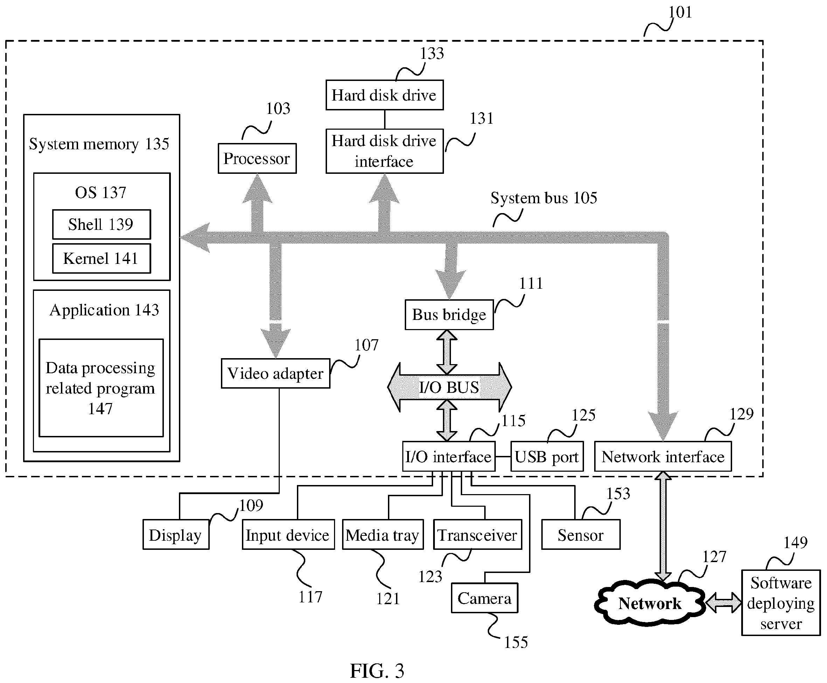

FIG. 3 is a schematic diagram of a structure of a computer system 101 in a vehicle according to an embodiment of this application. The computer system 101 includes a processor 103, and the processor 103 is coupled to a system bus 105. The processor 103 may be configured to implement a function of the controller in FIG. 2. The processor 103 may be one or more processors, and each processor may include one or more processor cores. A video adapter (video adapter) 107 is further included, the video adapter may drive a display 109, and the display 109 is coupled to the system bus 105. The system bus 105 is coupled to an input/output (I/O) bus 113 through a bus bridge 111. An I/O interface 115 is coupled to the I/O bus. The I/O interface 115 communicates with a plurality of I/O devices, for example, an input device 117 (for example, a keyboard, a mouse, and a touchscreen), a media tray (media tray) 121 (for example, a CD-ROM and a multimedia interface), a transceiver 123 (which may send and/or receive a radio communication signal), a video camera 155 (which may capture a dynamic digital video image), and an external USB port 125. Optionally, an interface connected to the I/O interface 115 may be a USB port.

The processor 103 may be any conventional processor, including a reduced instruction set computing ("RISC") processor, a complex instruction set computing ("CISC") processor, or a combination thereof. Optionally, the processor may be a dedicated apparatus such as an application-specific integrated circuit ("ASIC"). Optionally, the processor 103 may be a neural-network processor or a combination of the neural-network processor and the foregoing conventional processor.

Optionally, in various embodiments described in this application, the computer system 101 may be located away from an autonomous vehicle, and may wirelessly communicate with the autonomous vehicle. In other aspect, some of the processes described in this application are performed on a processor disposed inside an autonomous vehicle, and others are performed by a remote processor, including actions required to perform a single operation.

The computer system 101 may communicate with a software deploying server 149 through a network interface 129. The network interface 129 is a hardware network interface, for example, a network interface card. A network 127 may be an external network, such as the Internet; or may be an internal network, such as the Ethernet or a virtual private network (VPN). Optionally, the network 127 is a wireless network, for example, a Wi-Fi network or a cellular network.

A hard disk drive interface is coupled to the system bus 105. A hardware drive interface is connected to the hard disk drive. A system memory 135 is coupled to the system bus 105. Data running in the system memory 135 may include an operating system 137 and an application 143 of the computer 101.

The operating system includes a shell 139 and a kernel (kernel) 141. The shell 139 is an interface between a user and the kernel (kernel) of the operating system. The shell is the outermost layer of the operating system. The shell manages interaction between the user and the operating system: waiting for input of the user, interpreting the input of the user for the operating system, and processing various outputs of the operating system.

The kernel 141 includes parts that are in the operating system and that are used to manage a memory, a file, a peripheral, and a system resource, and directly interacts with hardware. The kernel of the operating system usually runs processes, provides communication between processes, and provides CPU time slice management, interruption management, memory management, I/O management, and the like.

The application 143 includes a program 147 related to data processing and a program related to vehicle autonomous driving control. The program 147 related to data processing is configured to separately manage data of a plurality of ECUs. The computer system 101 may implement, by executing the program 147 related to data processing, a function of the controller described in FIG. 2, that is, manage the data of the plurality of ECUs, for example, delete data stored in an ECU.

The program related to vehicle autonomous driving control may include, for example, a program for managing interaction between an autonomous driving vehicle and an obstacle on a road, a program for controlling a route or a speed of the autonomous driving vehicle, and a program for controlling interaction between the autonomous driving vehicle and another autonomous driving vehicle on the road. The application 143 also exists in a system of the deploying server 149.

A sensor 153 is associated with the computer system 101. The sensor 153 is configured to detect an ambient environment of the computer system 101. For example, the sensor 153 can detect animals, vehicles, obstacles, pedestrian crosswalks, and the like. Further, the sensor can detect ambient environments of the animals, the vehicles, the obstacles, or the pedestrian crosswalks. For example, the sensor can detect the ambient environment of animals such as other animals in the ambient environment, a weather condition, and brightness of the ambient environment.

Generally, one or more ECUs are disposed in each vehicle component that has an electronic control function in a vehicle, and each ECU has functions such as a control function and a computing function. In a normal driving process of a vehicle, an ECU in the vehicle usually needs to obtain various types of data of the vehicle in the driving process, for example, data such as a driving speed and a driving location of the vehicle.

After the vehicle runs for a period of time, the ECU in the vehicle usually stores various types of data generated in the driving process of the vehicle, and the data stored in the ECU in the vehicle is private data of a vehicle owner. In some cases, the vehicle owner usually wants to delete some private data stored in the vehicle to avoid privacy leakage. However, a current vehicle does not support fine-grained deletion of data in each ECU in the vehicle by a vehicle owner. The vehicle owner can delete data of components in the entire vehicle only in a vehicle formatting manner, and the deletion of the data of the components in the entire vehicle affects normal driving of the vehicle by the vehicle owner.

In view of this, an embodiment of this application provides a data processing method, applied to a vehicle including a controller and a plurality of ECUs. Based on the data processing method provided in embodiments of this application, when a plurality of ECUs in a vehicle need to obtain sensor data, the plurality of ECUs send a data request to a controller, and the controller records information about requesting the sensor data by the ECUs. In this way, when deletion of specific sensor data is triggered, the controller may determine, based on the recorded information, an ECU that obtains the sensor data, and send a data deletion instruction to the ECU, thereby implementing fine-grained management of in-vehicle data.

The data processing method provided in embodiments of this application is described below in detail. It should be noted that the data processing method provided in this application may be applied to a vehicle. The vehicle includes a controller and a plurality of ECUs, and the controller is communicatively connected to the plurality of ECUs. For any one of the plurality of ECUs, the controller may manage data of the ECU based on the data processing method provided in embodiments of this application. Generally, there are usually hundreds of ECUs in the vehicle. The controller may manage data of each of the hundreds of ECUs based on the data processing method provided in embodiments of this application, to implement fine-grained management on ECUs in the vehicle.

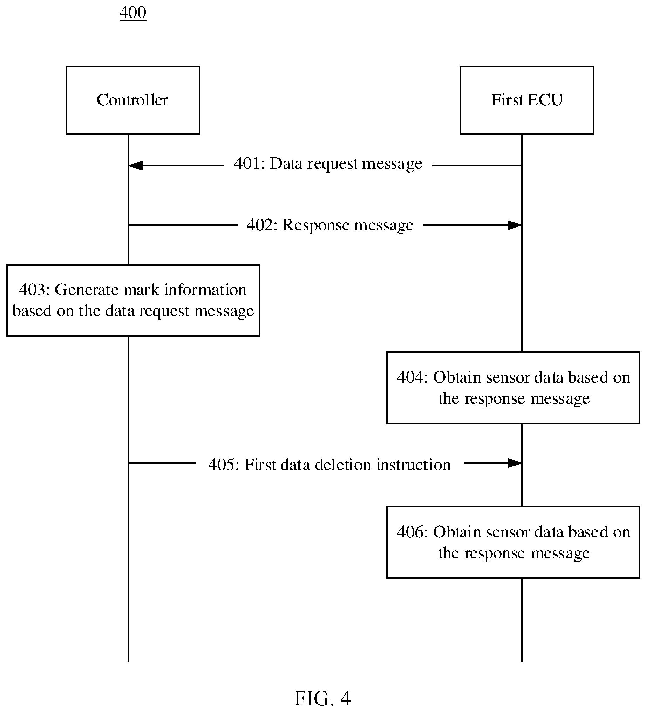

For ease of description, the data processing method provided in embodiments of this application is described below by using a first ECU as an example. The first ECU is any ECU in the plurality of ECUs. FIG. 4 is a schematic flowchart of a data processing method 400 according to an embodiment of this application. As shown in FIG. 4, the data processing method 400 includes the following steps 401 to 406.

Step 401: A controller receives a data request message from a first ECU, where the first ECU is any one of the plurality of ECUs, and the data request message is used to request to obtain sensor data.

In this embodiment, during running of the first ECU, the first ECU may need to obtain sensor data, to provide a related vehicle service. When the first ECU needs to obtain the sensor data, the first ECU sends a data request message to the controller, to request to obtain the required sensor data.

For example, it is assumed that the first ECU is an ECU in a positioning system. To provide a positioning service, the first ECU needs to obtain sensor data obtained by a related sensor used for positioning. Therefore, in this case, the first ECU may send a data request message to the controller, to request the sensor data obtained by the related sensor used for positioning.

In another example, it is assumed that the first ECU is an ECU in an automatic braking system. To provide an automatic braking service, the first ECU needs to obtain sensor data obtained by a sensor used for ranging, to determine a distance between a vehicle and an obstacle based on the sensor data, thereby providing the automatic braking service in real time. For example, the first ECU needs to obtain sensor data obtained by sensors such as a camera, a lidar, and an ultrasonic radar. In this case, the first ECU may send a data request message to the controller, to request the sensor data obtained by the sensor used for ranging.

Optionally, the data request message sent by the first ECU may indicate, in a direct indication manner, the sensor data requested by the first ECU. For example, the data request message carries an identifier of a camera, an identifier of a lidar, or an identifier of an ultrasonic radar, to indicate that camera data, lidar data, or ultrasonic radar data is requested.

The data request message sent by the first ECU may indicate, in an indirect indication manner, the sensor data requested by the first ECU. For example, the data request message indicates that the first ECU needs to request sensor data to provide an automatic braking service. When the data request message indicates that the first ECU needs to request the sensor data used to provide the automatic braking service, the controller may determine, based on the data request message, that the sensor data requested by the first ECU is camera data, lidar data, or ultrasonic radar data.

That is, for the controller, a purpose of the data request message sent by the first ECU is to request sensor data, and the data request message may carry or not carry content of the requested sensor data. Content carried in the data request message is not limited in this embodiment.

Step 402: The controller sends a response message to the first ECU, where the response message indicates the first ECU to obtain the sensor data.

After the controller obtains the data request message sent by the first ECU, the controller may determine whether the first ECU has permission to access the sensor data indicated in the data request message. If the controller determines that the first ECU has permission to access the sensor data indicated in the data request message, the controller sends a response message to the first ECU, to indicate the first ECU to obtain the sensor data indicated in the data request message.

Simply speaking, when the first ECU has permission to access the sensor data, the controller returns a response message to the first ECU, where the response message can indicate how the first ECU obtains the sensor data. When the first ECU does not have permission to access the sensor data, the controller may not return the response message to the first ECU, so that the first ECU cannot obtain the required sensor data, to implement accurate data management.

Optionally, a permission configuration policy may be preconfigured in the vehicle, and the permission configuration policy can indicate data access permission of each ECU. The permission configuration policy may be set by a user through a human-machine interface in the vehicle or a remote terminal. Alternatively, the permission configuration policy may be preset before the vehicle is delivered. The controller determines, according to the preset permission configuration policy, that the first ECU has permission to access the sensor data.

For example, the user sets the permission configuration policy through the human-machine interface in the vehicle, and the permission configuration policy indicates that only ECUs in the positioning system and a navigation system have access to data of a sensor used for positioning. In this case, when the first ECU is an ECU in a positioning system or a navigation system, if the sensor data requested by the first ECU is data of a sensor used for positioning, the controller may determine that the first ECU has permission to access the data of the sensor used for positioning. When the first ECU is not an ECU in a positioning system or a navigation system, if the sensor data requested by the first ECU is data of a sensor used for positioning, the controller may determine that the first ECU does not have permission to access the data of the sensor used for positioning.

Optionally, the response message sent by the controller to the first ECU may alternatively indicate how the first ECU processes the obtained sensor data. For example, the response message sent by the controller may indicate the first ECU to store the obtained sensor data; or further, the response message sent by the controller further indicates a capacity of storage space that is in the first ECU and that is used to store the obtained sensor data. For example, the response message sent by the controller may indicate that the first ECU needs to store the obtained sensor data, and the first ECU needs to store the sensor data in storage space with a capacity of 10 megabytes (Megabyte, MB).

For example, the response message sent by the controller may indicate the first ECU to only read the obtained sensor data but not to store the obtained sensor data. For example, when the first ECU is an ECU in a reversing image system, the first ECU is configured to obtain camera data, and process the camera data, to provide a reversing image service. In this case, the first ECU provides the reversing image service in real time, and the first ECU does not need to store the obtained camera data. Therefore, the response message sent by the controller may indicate the first ECU to only read the obtained camera data but not to store the camera data.

Step 403: The controller generates mark information based on the data request message, where the mark information records request information for the sensor data.

After the controller obtains the data request message of the first ECU, the controller generates the mark information based on the data request message, to record that the first ECU requests the sensor data. The controller may record, by generating the mark information based on the data request message, information about requesting sensor data by each ECU, so that the controller can subsequently effectively determine data stored on each ECU, thereby quickly deleting sensor data on a specific ECU.

Specifically, the mark information generated by the controller records the request information for the sensor data. The request information for the sensor data includes a requester of the sensor data, a request time of the sensor data, and content of the sensor data. For example, the request information for the sensor data may be as follows: The first ECU requests camera data at xx:xx on xx/xx (month/day). Alternatively, the first ECU requests camera data, lidar data, and ultrasonic radar data at xx:xx on xx/xx (month/day).

It should be noted that an execution sequence between step 402 and step 403 is not limited in this embodiment. The controller may first perform step 402, and then perform step 403. Alternatively, the controller may first perform step 403, and then perform step 402. Alternatively, the controller may perform step 402 and step 403 in parallel.

In addition, the controller may generate the mark information after determining that the first ECU has permission to access the requested sensor data. When the first ECU does not have permission to access the requested sensor data, the controller does not return a response message to the first ECU. Therefore, the first ECU may not generate the mark information.

Step 404: The first ECU obtains the sensor data based on the response message.

After obtaining the response message returned by the controller, the first ECU may obtain the sensor data based on the response message.

Optionally, when the response message further indicates how the first ECU processes the obtained sensor data, the first ECU may process the obtained response message based on an indication of the response message. For example, when the response message indicates that the first ECU needs to store the obtained sensor data and the first ECU needs to store the sensor data in storage space with a capacity of 10 MB, the first ECU allocates, based on the indication of the response message, 10-MB storage space in storage hardware corresponding to the first ECU, and stores the obtained sensor data in the allocated 10-MB storage space.

In addition, after the first ECU stores the obtained sensor data, the first ECU may further send a feedback message to the controller, to feed back, to the controller, an address of the storage space used to store the sensor data. For example, the first ECU may send a feedback message to the controller, where the feedback message indicates a start address and an end address of the storage space.

Step 405: If the vehicle triggers deletion of the sensor data in the first ECU, the controller sends a first data deletion instruction to the first ECU based on the mark information, where the first data deletion instruction indicates the first ECU to delete the sensor data.

In this embodiment, the vehicle may trigger deletion of the sensor data in the first ECU in a plurality of manners.

In a possible implementation, the controller determines, based on the mark information and a preset data retention period, that the sensor data in the first ECU expires, to trigger deletion of the sensor data in the first ECU. The preset data retention period may be a storage period of in-vehicle data. When a storage time of the data reaches the storage period (that is, the data expires), the data needs to be deleted. The preset data retention period may be set by a user, or may be specified in the industry. For example, the preset data retention period may be 10 days or 15 days.

For example, it is assumed that the mark information generated by the controller indicates that the first ECU requests the camera data on January 10, and the preset data retention period is 10 days. In this case, on January 20, the controller may determine, based on the mark information and the preset data retention period, that the camera data requested by the first ECU expires. Therefore, the controller sends the first data deletion instruction to the first ECU, to indicate the first ECU to delete the camera data.

In another possible implementation, the controller obtains a second data deletion instruction triggered by a user, where the second data deletion instruction indicates to delete the sensor data in the first ECU. After the controller obtains the second data deletion instruction, the controller sends the first data deletion instruction to the first ECU based on the mark information, to indicate the first ECU to delete the sensor data.

Optionally, the user may trigger the second data deletion instruction in a plurality of manners. For example, the user may select, on a human-machine interface of the vehicle, data that needs to be deleted, to trigger the second data deletion instruction. For example, the user selects a specific application on the human-machine interface of the vehicle, and deletes data corresponding to the application, to trigger the second data deletion instruction. The controller may determine, based on the second data deletion instruction, an ECU (that is, the first ECU) corresponding to an application selected by the user, to send the first data deletion instruction to the ECU corresponding to the application.

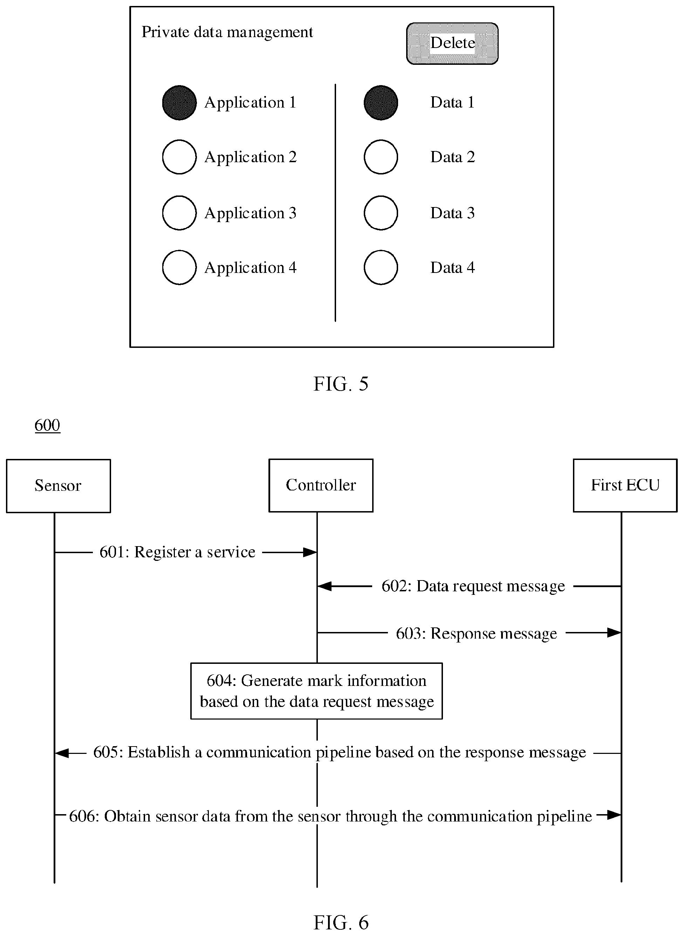

FIG. 5 is a schematic diagram of a human-machine interface of a vehicle according to an embodiment of this application. As shown in FIG. 5, an application installed on the vehicle is displayed on the human-machine interface of the vehicle, and each application corresponds to different data. A user may select a specific application on the human-machine interface, and delete specific data in the application.

For example, the user may select a navigation application on the human-machine interface of the vehicle, where the navigation application includes data such as positioning data, navigation voice data, and user configuration data. The user may further choose to delete the positioning data in the navigation application, to trigger the second data deletion instruction. In this way, after the controller obtains the second data deletion instruction, the controller determines, based on the second data deletion instruction, that positioning data on an ECU in a navigation system corresponding to the navigation application needs to be deleted. The navigation system may be, for example, a navigation system based on a global positioning system (Global Positioning System, GPS) in a vehicle. Therefore, the controller may send the first data deletion instruction to the ECU (for example, the foregoing first ECU) in the navigation system. The first data deletion instruction indicates the ECU to delete positioning-related sensor data.

In addition, the user may select, on a terminal (for example, a smartphone) remotely connected to the vehicle, data that needs to be deleted, to trigger the second data deletion instruction. It may be understood that the terminal remotely connected to the vehicle may also display an application installed on the vehicle, and each application corresponds to different data. The user may select a specific application from the terminal, and delete specific data in the application.

Alternatively, the user may modify permission of an application on the human-machine interface of the vehicle or on the terminal remotely connected to the vehicle, to trigger the second data deletion instruction. Specifically, before the user modifies the permission of the application, the application has permission to access the sensor data, that is, the ECU in the system corresponding to the application also has permission to access the sensor data. After the user modifies the permission of the application, the application no longer has permission to access the sensor data, that is, the ECU in the system corresponding to the application does not have permission to access the sensor data. Therefore, the controller needs to send a data deletion instruction to the ECU, to indicate the ECU to delete previously obtained sensor data.

For example, before the user modifies permission of the navigation application, the navigation application has permission to access positioning data, that is, an ECU in the navigation system corresponding to the navigation application has permission to access positioning-related sensor data. Therefore, the ECU in the navigation system may send a data request message to the controller, to request positioning-related sensor data, and store the obtained sensor data in storage hardware in the ECU. After the user modifies the permission of the navigation application, the navigation application no longer has permission to access positioning data, that is, an ECU in the navigation system corresponding to the navigation application also does not have permission to access positioning-related sensor data. Therefore, the controller may send a data deletion instruction to the ECU in the navigation system, to indicate the ECU to delete previously obtained positioning-related sensor data.

It should be noted that, when a plurality of ECUs all obtain data of a sensor, if the user delivers an instruction for deleting the data of the sensor, the controller may determine, based on mark information generated when the plurality of ECUs request the sensor data, the plurality of ECUs that obtain the data of the sensor, to separately send a data deletion instruction to the plurality of ECUs, to indicate each of the plurality of ECUs to delete the data of the sensor.

For example, it is assumed that both an ECU 1 and an ECU 2 request data of a camera 1 from the controller, and the user delivers a data deletion instruction 1 through the human-machine interface. The data deletion instruction 1 indicates to delete data of the camera 1. The controller sends a data deletion instruction 2 to the ECU 1 and sends a data deletion instruction 3 to the ECU 2 based on mark information 1 and mark information 2. The mark information 1 indicates that the ECU 1 requests the data of the camera 1, the mark information 2 indicates that the ECU 2 requests the data of the camera 1, the data deletion instruction 2 indicates the ECU 1 to delete the data of the camera 1 stored in the ECU 1, and the data deletion instruction 3 indicates the ECU 2 to delete the data of the camera 1 stored in the ECU 2.

In other words, the controller may determine, based on the obtained second data deletion instruction, that deletion of the sensor data by the plurality of ECUs needs to be triggered, and the first ECU is one of the plurality of ECUs from which the sensor data needs to be deleted. Subsequently, the controller separately sends a corresponding data deletion instruction to the plurality of ECUs based on the second data deletion instruction, to indicate each ECU to delete corresponding sensor data. For example, the controller sends the first data deletion instruction to the first ECU, to indicate the first ECU to delete the sensor data in the first ECU.

Step 406: The first ECU deletes the sensor data in the first ECU based on the first data deletion instruction.

Optionally, when the first ECU feeds back the address of the storage space used to store the sensor data, the controller may add the address of the storage space used to store the sensor data to the first data deletion instruction, to indicate the first ECU to delete, based on the address of the storage space, the sensor data stored in the storage space. Therefore, when the first data deletion instruction indicates the address of the storage space, the first ECU may delete the sensor data in the storage space based on the address of the storage space indicated by the first data deletion instruction.

In this embodiment, when a plurality of ECUs in a vehicle need to obtain sensor data, the plurality of ECUs send a data request to a controller, and the controller records information about requesting the sensor data by the ECUs. In this way, when deletion of specific sensor data is triggered, the controller may determine, based on the recorded information, an ECU that obtains the sensor data, and send a data deletion instruction to the ECU, thereby implementing fine-grained management of in-vehicle data.

A process in which the controller indicates the first ECU to obtain the sensor data and delete the sensor data is described above. A specific process in which the first ECU obtains the sensor data is described below. FIG. 6 is a schematic flowchart of a data processing method 600 according to an embodiment of this application. As shown in FIG. 6, the data processing method 600 includes the following steps 601 to 606.

Step 601: A sensor registers a service with a controller.

In this embodiment, a sensor installed in a vehicle may register a service with the controller, to provide a data service to another component in the vehicle. After the sensor registers the service, the controller may obtain related configuration information of the sensor, for example, port information of the sensor and identity (Identity document, ID) information of the sensor.

Step 602: A controller receives a data request message from a first ECU, where the first ECU is any one of the plurality of ECUs, and the data request message is used to request to obtain sensor data.

In this embodiment, step 602 is similar to step 401. For details, refer to step 401. Details are not described herein again.

Step 603: The controller sends a response message to the first ECU, where the response message indicates the first ECU to obtain the sensor data.

In this embodiment, the response message sent by the controller includes information about a sensor, and the information about the sensor is used by the first ECU to establish a communication connection with the sensor, so that the first ECU obtains the sensor data from the sensor. For example, the controller determines, based on the data request message sent by the first ECU, the sensor to which the sensor data to be obtained by the first ECU belongs, and then the controller includes the information about the sensor in the response message based on the service registered by the sensor with the controller. The information about the sensor may include, for example, port information of the sensor and ID information of the sensor.

Step 604: The controller generates mark information based on the data request message, where the mark information records request information for the sensor data.

In this embodiment, step 604 is similar to step 403. For details, refer to step 403. Details are not described herein again.

Step 605: The first ECU establishes, based on information about a sensor, a communication connection with the sensor, where response information includes the information about the sensor.

After the first ECU obtains the response message returned by the controller, the first ECU establishes the communication connection with the sensor based on the information about the sensor in the response message. That is, the first ECU may establish a communication pipeline between the first ECU and the sensor based on the port information of the sensor, to establish the communication connection with the sensor.

Step 606: The first ECU obtains the sensor data from the sensor based on the communication connection.

After establishing the communication connection with the sensor, the first ECU may obtain, from the sensor in real time, the sensor data generated by the sensor.

When the vehicle triggers deletion of the sensor data in the first ECU, the controller sends a first data deletion instruction to the first ECU, to indicate the first ECU to delete the sensor data.

Optionally, when the first ECU obtains the sensor data by establishing the communication connection with the sensor, the first data deletion instruction may indicate the first ECU to disconnect the communication connection with the sensor. For example, when the user modifies permission of an application and the first ECU no longer has permission to access the sensor data, the controller may send the first data deletion instruction to the first ECU. The first data deletion instruction indicates the first ECU to delete the sensor data and indicates the first ECU to disconnect the communication connection with the sensor. Based on the first data deletion instruction, the first ECU may delete the stored sensor data, and delete the communication pipeline between the first ECU and the sensor, to disconnect the communication connection between the first ECU and the sensor.

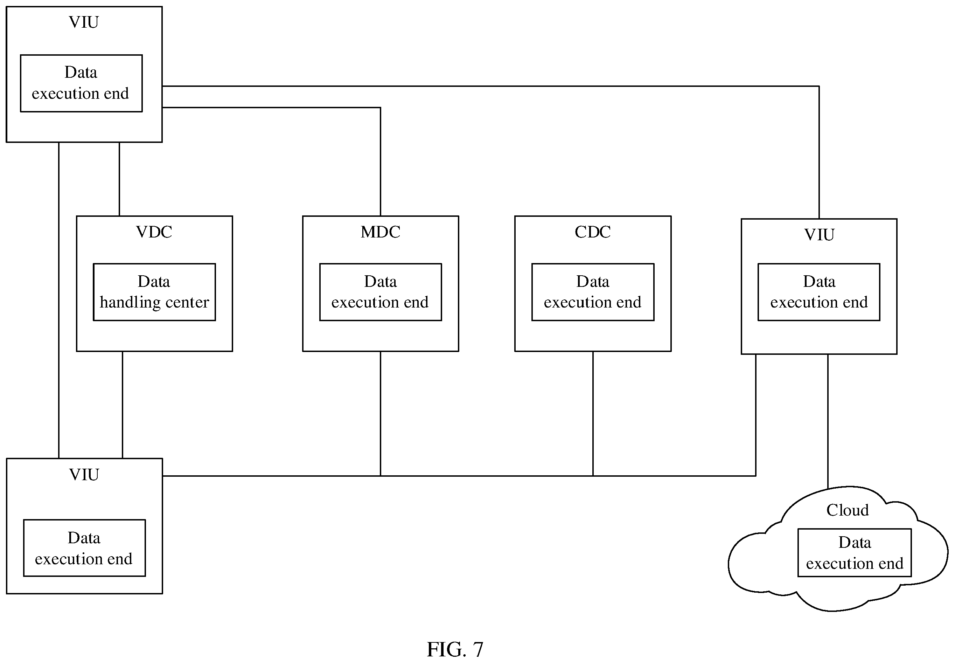

For ease of understanding, the data processing method provided in embodiments of this application is described below in detail with reference to specific examples. FIG. 7 is a schematic diagram of a system architecture of a vehicle according to an embodiment of this application.

In the vehicle shown in FIG. 7, the vehicle includes a vehicle domain controller (Vehicle Domain Controller, VDC), a mobile data center (Mobile Data Center, MDC), a smart cockpit domain controller (Cockpit Domain Controller, CDC), and a plurality of vehicle interface units (Vehicle Interface Unit, VIU). In addition, the VIUs in the vehicle are communicatively connected to, for example, a cloud server by a communication module in the vehicle. Each of the VDC, the MDC, the CDC, and the VIUs may include one or more ECUs.

In this embodiment, a complex operating system, for example, a vehicle open system architecture adaptive platform (Auto motive Open System Architecture, AUTOSAR), may be deployed on a component that has a complex computing capability in the vehicle. A simple operating system, for example, a vehicle open system architecture classic platform (Classic Auto motive Open System Architecture, Classic AutoSAR), may be deployed on a component that has a weak computing capability in the vehicle. For example, in FIG. 7, an AUTOSAR may be deployed on a VDC, an MDC, a CDC, and a Classic AutoSAR may be deployed on a VIU. Based on the AUTOSAR deployed on the VDC, software used to manage in-vehicle data may be further deployed on the VDC. The software is a data handling center shown in FIG. 7.

For the MDC, the CDC, and the VIU on which the Classic AutoSAR is deployed, software used to process data in the component, that is, a data execution end shown in FIG. 7, may be further deployed on the MDC, the CDC, and the VIU. In addition, a data execution end may also be deployed on a cloud server, and is configured to perform data processing according to an indication of the VDC.

Specifically, the VDC may manage data on each ECU in the MDC, the CDC, and the VIU by using the deployed data handling center; and the MDC, the CDC, and the VIU may obtain, by using the deployed data execution end, a data processing instruction delivered by the VDC, to obtain or delete sensor data.

Further, in this embodiment, the data processing method provided in embodiments of this application is described in detail by using a VDC as a controller, and any ECU of an MDC, a CDC, or a VIU as an ECU that interacts with the controller.

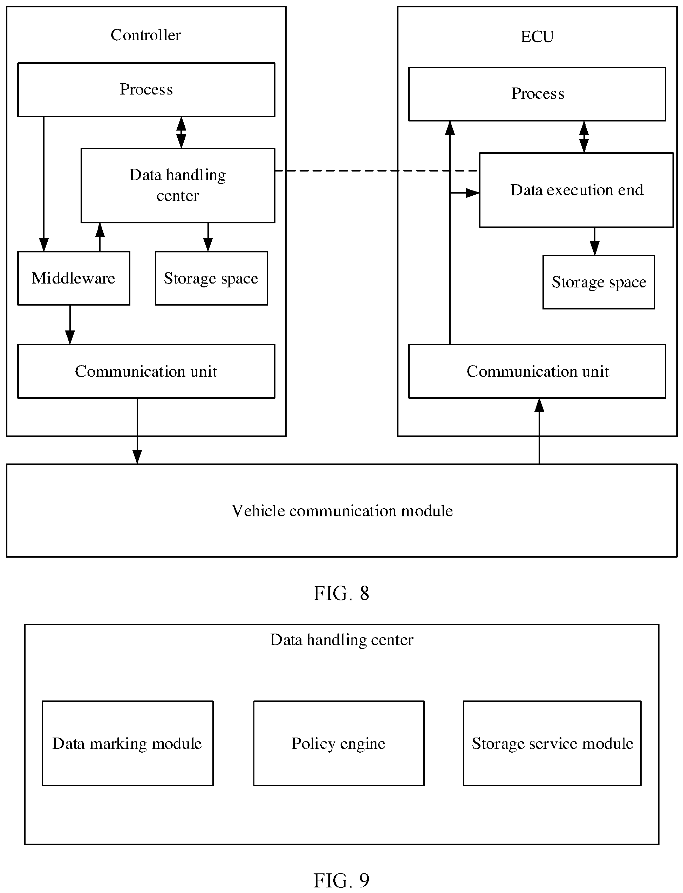

FIG. 8 is a schematic diagram of interaction between a controller and an ECU according to an embodiment of this application. As shown in FIG. 8, the controller includes a process, a data handling center, middleware, storage space, and a communication unit.

The process in the controller is used to implement some functions provided by the vehicle. The middleware is a type of software between an application and system software. The middleware uses a basic service provided by the system software to connect various parts of the application or different applications, to implement resource sharing and function sharing.

The storage space in the controller is used to store various types of data that needs to be used by the process during running. The communication unit in the controller is configured to communicatively connect to a communication module in the vehicle, so that the controller communicates with another component (for example, an ECU) in the vehicle.

In the controller, processes and middleware need to pass through the data handling center before accessing data in the storage space. In other words, the data handling center becomes a new resource manager entry to manage and control data access and storage.

Further, FIG. 9 is a schematic diagram of a structure of a data handling center according to an embodiment of this application. As shown in FIG. 9, the data handling center includes a data marking module, a policy engine, and a storage service module. The data marking module is configured to generate mark information based on a data request message sent by a data execution end in the ECU, to mark sensor data requested by the ECU. The policy engine is configured to determine, based on a preset data retention period and the mark information, whether data in the ECU expires. The storage service module is configured to manage and control a behavior of accessing data or storing data by a process in a controller.

In addition, the ECU includes a process, a data execution end, storage space, and a communication unit. The process in the ECU is used to implement a function provided by the ECU, and when accessing storage space in the ECU, the process in the ECU needs to pass through the data execution end in the ECU. The data execution end in the ECU subscribes to a service of the data handling center in the controller, receives instructions from the data handling center, and controls data write and deletion. The communication unit in the ECU is configured to communicatively connect to a communication module in the vehicle, so that the ECU communicates with another component (for example, a controller or a sensor) in the vehicle.

In actual application, when the process in the ECU needs to obtain sensor data, the data execution end sends a data request message to the data handling center in the controller. The data handling center in the controller obtains the data request message, determines whether the ECU has permission to access the sensor data, and returns a response message to the data execution end when the ECU has permission to access the sensor. After obtaining the response message, the data execution end establishes a communication connection with the sensor based on the response message, to obtain the sensor data from the sensor and store the sensor data in the storage space in the ECU.

In addition, after the data handling center obtains the data request message sent by the ECU, the data marking module in the data handling center generates mark information to record that the ECU requests the sensor data at a specific time. After the policy engine in the data handling center determines, based on the mark information and the preset data retention period, that the sensor data in the ECU expires, the data handling center sends a data deletion instruction to the data execution end in the ECU, to indicate the data execution end to delete the sensor data in the storage space of the ECU. Finally, the data execution end deletes the sensor data in the storage space of the ECU based on the data deletion instruction. When the data deletion instruction sent by the data handling center of the controller further indicates the ECU to disconnect the communication connection with the sensor, the data execution end deletes the communication pipeline between the ECU and the sensor.

A procedure in which the controller manages data in an ECU in a vehicle is described below in embodiments of this application. A procedure in which the controller manages data in an untrusted device is described below.

It may be understood that, in addition to interacting with a trusted ECU in the vehicle, the controller may further interact with another untrusted device. For example, the controller interacts with an untrusted ECU or a third-party device in the vehicle, so that the untrusted ECU or the third-party device can obtain corresponding data. Alternatively, the controller may interact with a cloud server, to upload in-vehicle data to the server or indicate the server to delete vehicle-related data. The untrusted ECU may be an ECU produced by an unauthorized manufacturer, and security of the ECU cannot be ensured. The third-party device may be, for example, a device installed by a user in the vehicle, for example, an acoustic device, a navigation device, or a multimedia device.

For the controller in the vehicle, untrusted ECUs, third-party devices, and cloud servers in the vehicle are untrusted devices, that is, devices that are not trusted by the controller. In a process of performing data interaction with an untrusted device, the controller needs to store evidence of data interaction, to ensure reliability of data interaction.

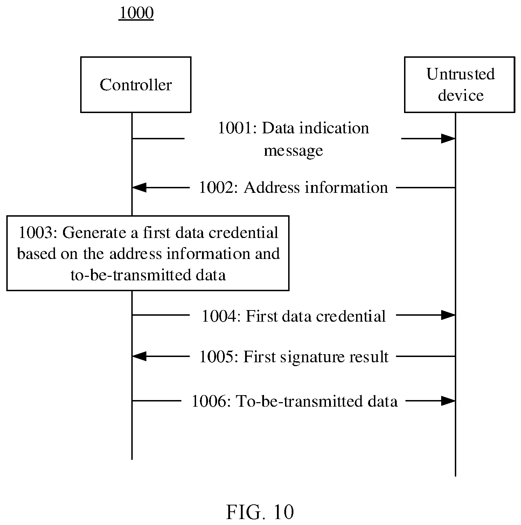

FIG. 10 is a schematic flowchart of a data processing method 1000 according to an embodiment of this application. As shown in FIG. 10, the data processing method 1000 includes the following steps 1001 to 1006.

Step 1001: A controller sends a data indication message to an untrusted device, where the data indication message indicates a size of to-be-transmitted data.

When data needs to be transmitted to an untrusted device, the controller sends a data indication message to the untrusted device based on a size of to-be-transmitted data that needs to be transmitted to the untrusted device. The data indication message indicates the size of to-be-transmitted data, and the to-be-transmitted data is data that needs to be transmitted to the untrusted device.

The untrusted device includes a second ECU or a server, and the second ECU is an untrusted ECU in the plurality of ECUs. In other words, the untrusted device may be a component inside the vehicle, or may be a cloud server.

During actual application, there may be a plurality of scenarios in which data needs to be transmitted to an untrusted device.

In a possible scenario, the untrusted device is the second ECU, the second ECU requests to obtain the sensor data from the controller, and the second ECU has permission to access the sensor data. In this scenario, the controller needs to control the sensor to transmit data to the second ECU. Therefore, the controller sends the data indication message to the second ECU, to indicate a size of to-be-transmitted sensor data.

In another possible scenario, the untrusted device is the second ECU, and the second ECU requests, from the controller, to obtain data stored in the controller. In this scenario, the controller needs to transmit data stored in the storage space of the controller to the second ECU. Therefore, the controller sends the data indication message to the second ECU, to indicate the size of the to-be-transmitted data.

In still another possible scenario, the untrusted device is the server, and the server requests to obtain in-vehicle data from the controller. When the data that the server requests to obtain is located on the controller, the controller may send the data indication message to the server based on the size of the to-be-transmitted data. When the data that the server requests to obtain is located on a component outside the controller, the controller may interact with the component and determine the size of the to-be-transmitted data, and then send the data indication message to the server.

Step 1002: The controller receives address information sent by the untrusted device, the address information indicates an address space that is in the untrusted device and that is used to store to-be-transmitted data, and the address information is determined by the untrusted device based on a size of the to-be-transmitted data.

After the untrusted device obtains the data indication message, the untrusted device may allocate storage space to the to-be-transmitted data based on the size of the to-be-transmitted data, and send, to the controller, address information of the storage space subsequently used to store the to-be-transmitted data. Simply speaking, the address information sent by the untrusted device to the controller indicates an address of the storage space reserved by the untrusted device for the to-be-transmitted data.

Step 1003: The controller generates a first data credential based on the address information and the to-be-transmitted data, where the first data credential uniquely indicates the to-be-transmitted data.

The controller may generate the first data credential based on the to-be-transmitted data and the address information returned by the untrusted device, where the first data credential can uniquely indicate the to-be-transmitted data.

Optionally, the first data credential includes the address information and one or more of a digest value of the to-be-transmitted data, a file locator of the to-be-transmitted data, and a timestamp of the to-be-transmitted data. Specifically, the digest value of the to-be-transmitted data may be a hash value of the to-be-transmitted data, and the controller may calculate the hash value of the to-be-transmitted data by using a hash algorithm. The file locator of the to-be-transmitted data may be, for example, a uniform resource locator (Uniform Resource Locator, URL), and the file locator can indicate a location of the to-be-transmitted data. The timestamp of the to-be-transmitted data may be a generation time of the to-be-transmitted data.

Step 1004: The controller sends the first data credential to the untrusted device.

Step 1005: The controller receives a first signature result sent by the untrusted device, where the first signature result is obtained by signing the first data credential by the untrusted device.

In this embodiment, after the controller sends the first data credential to the untrusted device, the untrusted device may perform signature verification on the first data credential, that is, perform digital signature on the first data credential, to indicate that the untrusted device has obtained the first data credential and acknowledged subsequent data transmission.

Step 1006: The controller controls transmission of the to-be-transmitted data to the untrusted device.

After the controller obtains the first signature result returned by the untrusted device, the controller may determine that the untrusted device has performed signature verification on the first data credential. Therefore, the controller may control transmission of the to-be-transmitted data to the untrusted device.

There may be a plurality of implementations in which the controller may control transmission of the to-be-transmitted data to the untrusted device.

In an implementation, if the untrusted device is the second ECU and the second ECU requests to obtain the sensor data from the controller, the controller may indicate, by returning information about a sensor to the second ECU, the second ECU to obtain the sensor data from the sensor. That is, the controller controls transmission of the to-be-transmitted data to the untrusted device by returning, to the untrusted device, information about establishment with the sensor.

In another implementation, if the untrusted device is the second ECU or the server and the to-be-transmitted data is located in storage space of the controller, the controller may send the data in the storage space of the controller to the second ECU or the server, to control transmission of the to-be-transmitted data to the untrusted device.

In still another implementation, if the untrusted device is a server and the to-be-transmitted data is located on a component other than the controller, the controller may communicate with the component that stores the to-be-transmitted data, to indicate the component to transmit the to-be-transmitted data to the server.

In this embodiment, before data is transmitted to an untrusted device, the controller obtains address information that is returned by the untrusted device and that is used to store the to-be-transmitted data, and generates a data credential based on the address information and the to-be-transmitted data. The data is transmitted to the untrusted device after the data credential is signed by using the untrusted device. The controller stores the data credential signed by using the untrusted device, so that evidence of data transmission to the untrusted device can be provided, thereby eliminating a threat that the untrusted device repudiates, after receiving the data, that the untrusted device does not receive the data, and improving reliability of data transmission.

A procedure in which the controller transmits data to the untrusted device is described above. A procedure in which the controller indicates the untrusted device to delete data is described above. Specifically, the method 1000 further includes the following steps 1007 to 1009.

Step 1007: The controller generates a second data credential based on to-be-deleted data.

When the controller determines that data in the untrusted device needs to be deleted, the controller generates a second data credential based on to-be-deleted data. The second data credential may include one or more of a digest value of the to-be-deleted data, the file locator of the to-be-deleted data, and the timestamp of the to-be-deleted data.

Optionally, the controller may obtain a data deletion instruction delivered by the user, to determine that data on the untrusted device needs to be deleted. Alternatively, the controller may learn, through calculation, that the data on the untrusted device expires, to determine that the data on the untrusted device needs to be deleted. Specifically, a manner of triggering deletion of the data in the untrusted device by the controller is similar to the manner described in step 405. For details, refer to step 405. Details are not described herein again.

Step 1008: The controller sends a third data deletion instruction to an untrusted device, where the untrusted device includes a third ECU or a server, the third ECU is an untrusted ECU in the plurality of ECUs, the third data deletion instruction includes the second data credential, and the third data deletion instruction indicates to delete the to-be-deleted data.

The third ECU and the second ECU may be a same ECU, or may be different ECUs. The controller may include the second data credential in the third data deletion instruction, to indicate the untrusted device to delete the data indicated in the third data deletion instruction when signing the second data credential.

Step 1009: The controller obtains a second signature result returned by the untrusted device, where the second signature result is obtained by signing the second data credential by the server, and the second signature result indicates that the untrusted device has deleted the to-be-deleted data.

In this embodiment, after obtaining the third data deletion instruction sent by the controller, the untrusted device signs the second data credential carried in the third data deletion instruction, to obtain the second signature result. Next, the untrusted device sends the second signature result to the controller, and deletes the data indicated in the third data deletion instruction.

After obtaining the second signature result, the controller may store the second signature result, where the second signature result can prove that the untrusted device has obtained the instruction indicating to delete the data, and the untrusted device has agreed to delete the indicated data.

In this embodiment, before the controller indicates the untrusted device to delete the data, the controller generates the data credential based on the to-be-deleted data. When indicating the untrusted device to delete the data, the controller sends the data credential to the untrusted device, so that the controller can obtain a result obtained by signing the data credential by the untrusted device. The controller stores a result obtained by signing the data credential by the untrusted device, so that the controller can provide evidence that the untrusted device confirms data deletion, thereby eliminating a threat that the untrusted device repudiates that no data deletion instruction is received, and improving reliability of data transmission.

For ease of understanding, a process in which a controller exchanges data with an untrusted device is described below in detail with reference to a specific example.

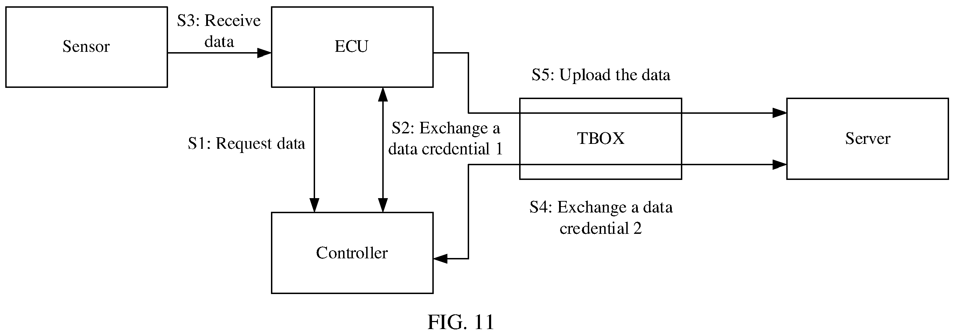

FIG. 11 is a schematic diagram of interaction between a controller and an untrusted device according to an embodiment of this application. As shown in FIG. 11, a procedure of interaction between a controller and an untrusted device includes the following steps S1 to S5.

S1: An ECU requests sensor data from a controller.

When the ECU needs to obtain sensor data, the ECU sends a data request message to the controller, to request the sensor data. After determining that the ECU has permission to access the sensor data, the controller feeds back a size of to-be-transmitted sensor data to the ECU.

S2: The ECU exchanges a data credential 1 with the controller.

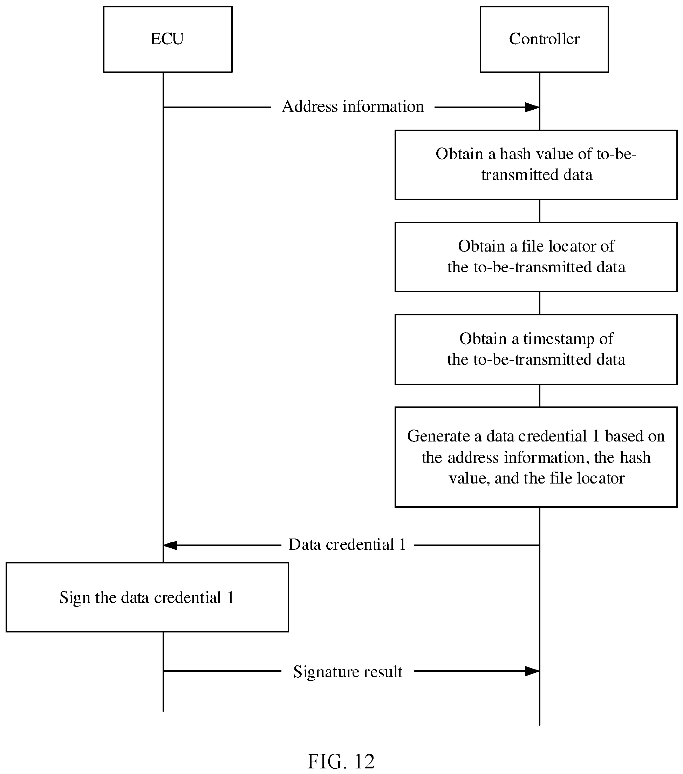

Specifically, FIG. 12 is a schematic flowchart of exchanging a data credential 1 between an ECU and a controller according to an embodiment of this application.

As shown in FIG. 12, after obtaining the size of the to-be-transmitted sensor data, the ECU sends address information to the controller, where the address information indicates an address of an address space reserved by the ECU. The address space reserved by the ECU is used to store the to-be-transmitted sensor data. The controller generates, based on the to-be-transmitted sensor data, a hash value, a file locator, and a timestamp that correspond to the to-be-transmitted sensor data. In addition, the controller generates the data credential 1 based on the hash value, the file locator, and the timestamp that correspond to the to-be-transmitted sensor data, and the address information obtained from the ECU. Next, the controller sends the generated data credential 1 to the ECU. After signing the data credential 1, the ECU returns, to the controller, a signature result obtained by signing the data credential 1, so that the controller stores the signature result obtained by signing the data credential 1 by the ECU.

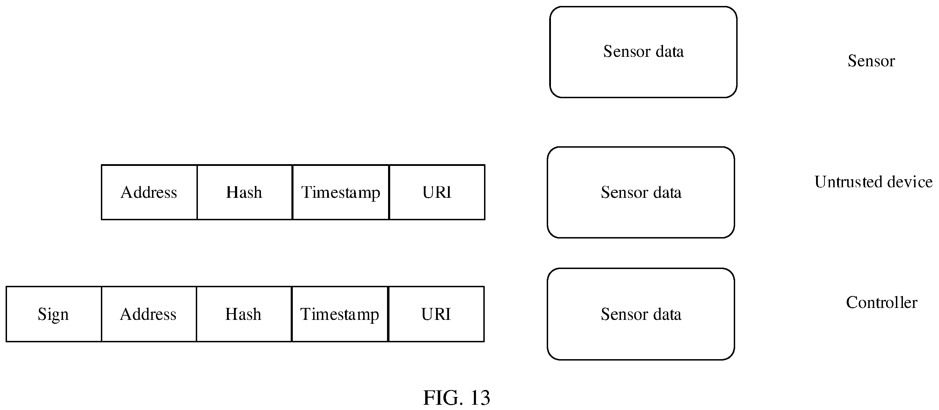

FIG. 13 is a schematic diagram of a structure of a data credential 1 according to an embodiment of this application. As shown in FIG. 13, for a sensor, the sensor may transmit sensor data in real time. For an untrusted device (for example, the ECU and the server in this embodiment), the untrusted device receives the data credential sent by the controller, where the data credential includes a file locator (URI), a timestamp (Timestamp), a hash value (Hash), and address information (Address) that correspond to the sensor data. For the controller, the controller may receive a signature result returned by the untrusted device, and the signature result includes the foregoing data credential and a signature (Sign) of the untrusted device.

S3: The ECU establishes a communication connection with a sensor, and receives sensor data from the sensor.

After the controller obtains the signature result returned by the ECU, the controller sends a response message to the ECU, where the response message includes information about the sensor. The information about the sensor may include, for example, port information of the sensor. After obtaining the information about the sensor, the ECU establishes the communication connection with the sensor based on the information about the sensor, and receives the sensor data from the sensor.

S4: The controller exchanges a data credential 2 with the server.

When the server sends the data request message to the controller to request the sensor data on the ECU, after determining that the server has permission to access the sensor data, the controller feeds back a size of to-be-uploaded data to the server. After obtaining the size of the to-be-uploaded data, the server sends address information to the controller, where the address information indicates an address of an address space reserved by the server. The address space reserved by the server is used to store the to-be-uploaded data. The controller generates, based on the to-be-uploaded data, a hash value, a file locator, and a timestamp that correspond to the to-be-uploaded data.

In addition, the controller generates the data credential 2 based on the hash value, the file locator, and the timestamp that correspond to the to-be-uploaded data and the address information obtained from the server. Next, the controller sends the generated data credential 2 to the server. After signing the data credential 2, the server returns, to the controller, a signature result obtained by signing the data credential 2, so that the controller stores the signature result obtained by signing the data credential 1 by the server.

S5: The ECU uploads the sensor data to the server based on an indication of the controller.

After the controller obtains the signature result returned by the server, the controller sends a data upload instruction to the ECU, to indicate the ECU to upload the sensor data to the server.

According to the embodiments corresponding to FIG. 1 to FIG. 13, to better implement the foregoing solutions in embodiments of this application, the following further provides related devices configured to implement the foregoing solutions.

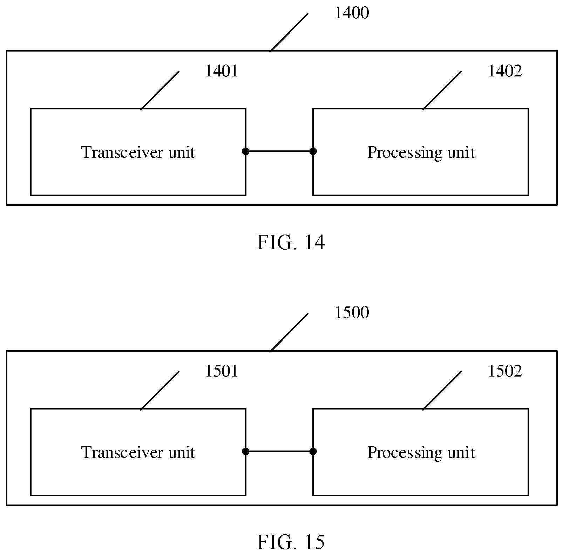

Specifically, FIG. 14 is a schematic diagram of a structure of a controller 1400 according to an embodiment of this application. The controller 1400 is located in a vehicle. The vehicle further includes a plurality of ECUs. The controller 1400 includes a transceiver unit 1401 and a processing unit 1402.

The transceiver unit 1401 is configured to receive a data request message from a first ECU, where the first ECU is any one of the plurality of ECUs, and the data request message is used to request to obtain sensor data.

The transceiver unit 1401 is further configured to a response message to the first ECU, where the response message indicates the first ECU to obtain the sensor data.

The processing unit 1402 is configured to generate mark information based on the data request message, where the mark information records request information for the sensor data.

If the vehicle triggers deletion of the sensor data in the first ECU, the transceiver unit 1401 is further configured to send a first data deletion instruction to the first ECU based on the mark information, where the first data deletion instruction indicates the first ECU to delete the sensor data.

In a possible implementation, the request information for the sensor data includes a requester of the sensor data, a request time of the sensor data, and content of the sensor data.

In a possible implementation, the processing unit 1402 is further configured to determine, based on the mark information and a preset data retention period, that the sensor data in the first ECU expires; or the transceiver unit 1401 is further configured to obtain a second data deletion instruction triggered by a user, where the second data deletion instruction indicates to delete the sensor data in the first ECU.

In a possible implementation, the response message includes sensor information, and the sensor information is used by the first ECU to establish a communication connection to the sensor, so that the first ECU obtains sensor data from the sensor.

In a possible implementation, the first data deletion instruction indicates the first ECU to disconnect the communication connection with the sensor.

In a possible implementation, the processing unit 1402 is further configured to determine, according to a preset permission configuration policy, that the first ECU has permission to access the sensor data.

In a possible implementation, the transceiver unit 1401 is further configured to receive address information sent by an untrusted device, where the untrusted device includes a second ECU or a server, the second ECU is an untrusted ECU in the plurality of ECUs, the address information indicates an address space that is in the untrusted device and that is used to store to-be-transmitted data, and the address information is determined by the untrusted device based on a size of the to-be-transmitted data. The processing unit 1402 is further configured to generate a first data credential based on the address information and the to-be-transmitted data, where the first data credential uniquely indicates the to-be-transmitted data. The transceiver unit 1401 is further configured to send the first data credential to the untrusted device. The transceiver unit 1401 is further configured to receive a first signature result sent by the untrusted device, where the first signature result is obtained by signing the first data credential by the untrusted device. The transceiver unit 1401 is further configured to control transmission of the to-be-transmitted data to the untrusted device.

In a possible implementation, the first data credential includes the address information and one or more of a digest value of the to-be-transmitted data, a file locator of the to-be-transmitted data, and a timestamp of the to-be-transmitted data.

In a possible implementation, the processing unit 1402 is further configured to generate a second data credential based on to-be-deleted data. The transceiver unit 1401 is further configured to send a third data deletion instruction to an untrusted device, where the untrusted device includes a third ECU or a server, the third ECU is an untrusted ECU in the plurality of ECUs, the third data deletion instruction includes the second data credential, and the third data deletion instruction indicates to delete the to-be-deleted data. The transceiver unit 1401 is further configured to obtain a second signature result returned by the untrusted device, where the second signature result is obtained by signing the second data credential by the server, and the second signature result indicates that the untrusted device has deleted the to-be-deleted data.

FIG. 15 is a schematic diagram of a structure of a first ECU 1500 according to an embodiment of this application. The first ECU 1500 is located in a vehicle. The vehicle includes a controller and a plurality of ECUs. The first ECU 1500 is any one of the plurality of ECUs. The first ECU 1500 includes a transceiver unit 1501 and a processing unit 1502. The transceiver unit 1501 is configured to send a data request message to the controller, where the data request message is used to request to obtain sensor data. The transceiver unit 1501 is configured to receive a response message from the controller, where the response message indicates the first ECU to obtain the sensor data. The processing unit 1502 is configured to obtain the sensor data based on the response message. If the vehicle triggers deletion of the sensor data in the first ECU, the transceiver unit 1501 is further configured to: receive a first data deletion instruction from the controller, and delete the sensor data in the first ECU based on the first data deletion instruction.

In a possible implementation, the transceiver unit 1501 is further configured to establish, based on information about a sensor, a communication connection with the sensor, where response information includes the information about the sensor. The transceiver unit 1501 is further configured to obtain the sensor data from the sensor based on the communication connection.

In a possible implementation, the first data deletion instruction indicates the first ECU to disconnect the communication connection with the sensor.

In a possible implementation, if the first ECU is an untrusted device, the transceiver unit 1501 is further configured to send address information to the controller, where the address information indicates an address space that is in the first ECU and that is used to store to-be-transmitted data, and the address information is determined by the first ECU based on a size of the to-be-transmitted data. The transceiver unit 1501 is further configured to receive a first data credential sent by the controller, where the first data credential is generated based on the address information and the to-be-transmitted data. The processing unit 1502 is further configured to sign the first data credential to obtain a first signature result. The transceiver unit 1501 is further configured to send the first signature result to the controller. The transceiver unit 1501 is further configured to receive the to-be-transmitted data transmitted by the controller.

In a possible implementation, the first data credential includes the address information and one or more of a digest value of the to-be-transmitted data, a file locator of the to-be-transmitted data, and a timestamp of the to-be-transmitted data.

In a possible implementation, if the first ECU is an untrusted device, the transceiver unit 1501 is further configured to receive a third data deletion instruction sent by the controller, where the third data deletion instruction includes a second data credential, and the second data credential is generated by the controller based on to-be-deleted data. The processing unit 1502 is further configured to sign the second data credential to obtain a second signature result. The transceiver unit 1501 is further configured to: send the second signature result to the controller, and delete the to-be-deleted data, where the second signature result indicates that the untrusted device has deleted the to-be-deleted data.

The data processing method provided in embodiments of this application may be specifically performed by a chip in an electronic device. The chip includes a processing unit and a communication unit. The processing unit may be, for example, a processor, and the communication unit may be, for example, an input/output interface, a pin, or a circuit. The processing unit may execute computer executable instructions stored in a storage unit, so that a chip in a server performs the data processing methods described in the embodiments shown in FIG. 1 to FIG. 13. Optionally, the storage unit is a storage unit in the chip, for example, a register or a cache. Alternatively, the storage unit may be a storage unit that is in a wireless access device end and that is located outside the chip, for example, a read-only memory (read-only memory, ROM), another type of static storage device that can store static information and instructions, or a random access memory (random access memory, RAM).

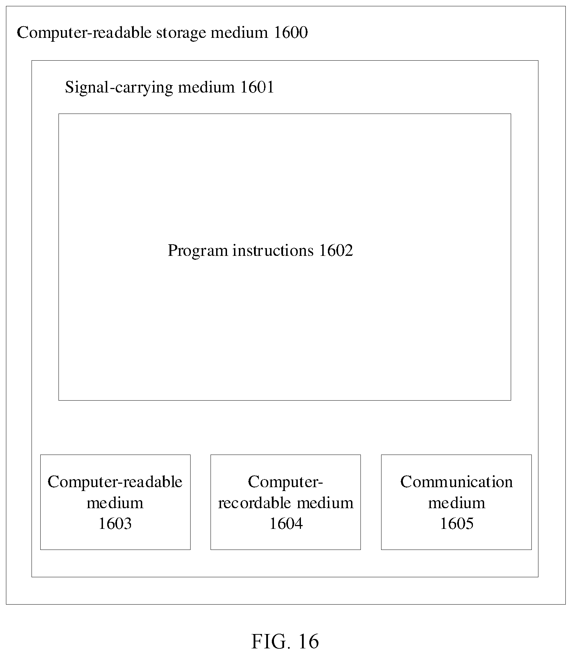

FIG. 16 is a schematic diagram of a structure of a computer-readable storage medium 1600 according to an embodiment of this application. An embodiment of this application further provides a computer-readable storage medium. In some embodiments, the method disclosed in FIG. 4 may be implemented as computer program instructions encoded in a machine-readable format on the computer-readable storage medium or encoded in another non-transitory medium or product.

FIG. 16 schematically shows a conceptual partial view of an example computer-readable storage medium arranged according to at least some embodiments shown herein. The example computer-readable storage medium includes a computer program for executing a computer process on a computing device.

In an embodiment, the computer-readable storage medium 1600 is provided by using a signal-carrying medium 1601. The signal-carrying medium 1601 may include one or more program instructions 1602, and when being run by one or more processors, the program instructions 1602 may provide functions or some functions described above for FIG. 7. In addition, the program instructions 1602 in FIG. 16 also describe example instructions.

In some examples, the signal-carrying medium 1601 may include a computer-readable medium 1603, for example, but not limited to a hard disk drive, a compact disc (CD), a digital video disc (DVD), a digital tape, a memory, a ROM, or a RAM.

In some implementations, the signal-carrying medium 1601 may include a computer-recordable medium 1604, for example, but not limited to, a memory, a read/write (R/W) CD, and an R/W DVD. In some implementations, the signal-carrying medium 1601 may include a communication medium 1605, for example, but not limited to, a digital and/or analog communication medium (for example, an optical fiber cable, a waveguide, a wired communication link, or a wireless communication link). Therefore, for example, the signal-carrying medium 1601 may be conveyed by a wireless communication medium 1605 (for example, a wireless communication medium that complies with the IEEE 802.9 standard or another transmission protocol).

The one or more program instructions 1602 may be, for example, computer-executable instructions or logic implementation instructions. In some examples, a computing device may be configured to provide various operations, functions, or actions in response to the program instructions 1602 transmitted to the computing device by using one or more of the computer-readable medium 1603, the computer-recordable medium 1604, and/or the communication medium 1605.

It should be understood that the arrangement described herein is merely used as an example. Therefore, it may be understood by a person skilled in the art that other arrangements and other elements (for example, machines, interfaces, functions, sequences, and groups of functions) can be used instead, and that some elements may be omitted together based on an expected result. In addition, many of the described elements are functional entities that can be implemented as discrete or distributed components, or implemented in any suitable combination at any suitable position in combination with another component.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in the form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

## Claims

1. A data processing method, wherein the method is applied to a vehicle (100) comprising a controller and a plurality of electronic control units ECUs, and the method comprises:
receiving (401), by the controller, a data request message from a first ECU, wherein the first ECU is any one of the plurality of ECUs, and the data request message is used to request to obtain sensor data;
sending (402), by the controller, a response message to the first ECU, wherein the response message indicates the first ECU to obtain the sensor data;
generating (403), by the controller, mark information based on the data request message, wherein the mark information records request information for the sensor data; and
if the vehicle (100) triggers deletion of the sensor data in the first ECU, sending (405), by the controller, a first data deletion instruction to the first ECU based on the mark information, wherein the first data deletion instruction indicates the first ECU to delete the sensor data.

2. The method according to claim 1, wherein the request information for the sensor data comprises a requester of the sensor data, a request time of the sensor data, and content of the sensor data.

3. The method according to claim 1 or 2, wherein that the intelligent vehicle (100) triggers deletion of the sensor data in the first ECU comprises:
determining, by the controller based on the mark information and a preset data retention period, that the sensor data in the first ECU expires; or
obtaining, by the controller, a second data deletion instruction triggered by a user, wherein the second data deletion instruction indicates to delete the sensor data in the first ECU.

4. The method according to any one of claims 1 to 3, wherein the response message comprises information about a sensor, and the information about the sensor is used by the first ECU to establish a communication connection with the sensor, so that the first ECU obtains the sensor data from the sensor.

5. The method according to claim 4, wherein the first data deletion instruction further indicates the first ECU to disconnect the communication connection with the sensor.

6. The method according to any one of claims 1 to 5, wherein before the sending, by the controller, a response message to the first ECU, the method further comprises:
determining, by the controller according to a preset permission configuration policy, that the first ECU has permission to access the sensor data.

7. The method according to any one of claims 1 to 6, wherein the method further comprises:
receiving (1002), by the controller, address information sent by an untrusted device, wherein the untrusted device comprises a second ECU or a server, the second ECU is an untrusted ECU in the plurality of ECUs, the address information indicates an address space that is in the untrusted device and that is used to store to-be-transmitted data, and the address information is determined by the untrusted device based on a size of the to-be-transmitted data;
generating (1003), by the controller, a first data credential based on the address information and the to-be-transmitted data, wherein the first data credential uniquely indicates the to-be-transmitted data;
sending (1004), by the controller, the first data credential to the untrusted device;
receiving (1005), by the controller, a first signature result sent by the untrusted device, wherein the first signature result is obtained by signing the first data credential by the untrusted device; and
controlling (1006), by the controller, transmission of the to-be-transmitted data to the untrusted device.

8. The method according to claim 7, wherein the first data credential comprises the address information and one or more of a digest value of the to-be-transmitted data, a file locator of the to-be-transmitted data, and a timestamp of the to-be-transmitted data.

9. The method according to any one of claims 1 to 8, wherein the method further comprises:
generating, by the controller, a second data credential based on to-be-deleted data;
sending, by the controller, a third data deletion instruction to an untrusted device, wherein the untrusted device comprises a third ECU or a server, the third ECU is an untrusted ECU in the plurality of ECUs, the third data deletion instruction comprises the second data credential, and the third data deletion instruction indicates to delete the to-be-deleted data; and
obtaining, by the controller, a second signature result returned by the untrusted device, wherein the second signature result is obtained by signing the second data credential by the server, and the second signature result indicates that the untrusted device has deleted the to-be-deleted data.

10. A data processing method, wherein the method is applied to a vehicle (100) comprising a controller and a plurality of electronic control units ECUs, and the method comprises:
sending (401), by a first ECU, a data request message to the controller, wherein the first ECU is any one of the plurality of ECUs, and the data request message is used to request to obtain sensor data;
receiving (402), by the first ECU, a response message from the controller, wherein the response message indicates the first ECU to obtain the sensor data;
obtaining, (404) by the first ECU, the sensor data based on the response message; and
if the vehicle (100) triggers deletion of the sensor data in the first ECU, receiving, by the first ECU, a first data deletion instruction from the controller, and deleting the sensor data in the first ECU based on the first data deletion instruction.

11. The method according to claim 10, wherein the obtaining (404), by the first ECU, the sensor data based on the response message comprises:
establishing, by the first ECU based on information about a sensor, a communication connection with the sensor, wherein response information comprises the information about the sensor; and
obtaining, by the first ECU, the sensor data from the sensor based on the communication connection.

12. The method according to claim 11, wherein the first data deletion instruction further indicates the first ECU to disconnect the communication connection with the sensor.

13. The method according to any one of claims 10 to 12, wherein the method further comprises:
if the first ECU is an untrusted device, sending (1002), by the first ECU, address information to the controller, wherein the address information indicates an address space that is in the first ECU and that is used to store to-be-transmitted data, and the address information is determined by the first ECU based on a size of the to-be-transmitted data;
receiving (1004), by the first ECU, a first data credential sent by the controller, wherein the first data credential is generated based on the address information and the to-be-transmitted data;
signing, by the first ECU, the first data credential to obtain a first signature result;
sending (1005), by the first ECU, the first signature result to the controller; and
receiving, by the first ECU, the to-be-transmitted data transmitted by the controller.

14. An ECU (1500), comprising a memory and a processor, wherein the memory stores code, the processor is configured to execute the code, and when the code is executed, the ECU performs the method according to any one of claims 10 to 13.

15. A vehicle (100), comprising a controller and a plurality of ECUs, wherein the controller is separately connected to the plurality of ECUs, the controller comprises a memory and a processor, wherein the memory stores code, the processor is configured to execute the code, and when the code is executed, the controller performs the method according to any one of claims 1 to 9.

## Patentansprüche

1. Datenverarbeitungsverfahren, wobei das Verfahren auf ein Fahrzeug (100) angewendet wird, das ein Steuergerät und eine Vielzahl von elektronischen Steuereinheiten, ECUs, umfasst, und das Verfahren Folgendes umfasst:
Empfangen (401), durch das Steuergerät, einer Datenanforderungsnachricht von einer ersten ECU, wobei die erste ECU eine beliebige aus der Vielzahl von ECUs ist und die Datenanforderungsnachricht dazu verwendet wird, anzufordern, Sensordaten zu erlangen;
Senden (402), durch das Steuergerät, einer Antwortnachricht an die erste ECU, wobei die Antwortnachricht der ersten ECU angibt, die Sensordaten zu erlangen;
Erzeugen (403), durch das Steuergerät, von Markierungsinformationen auf der Grundlage der Datenanforderungsnachricht, wobei die Markierungsinformationen Anforderungsinformationen für die Sensordaten aufzeichnen; und wenn das Fahrzeug (100) eine Löschung der Sensordaten in der ersten ECU auslöst, Senden (405), durch das Steuergerät, einer ersten Datenlöschanweisung an die erste ECU auf der Grundlage der Markierungsinformationen, wobei die erste Datenlöschanweisung der ersten ECU angibt, die Sensordaten zu löschen.

2. Verfahren nach Anspruch 1, wobei die Anforderungsinformationen für die Sensordaten einen Anforderer der Sensordaten, eine Anforderungszeit der Sensordaten und einen Inhalt der Sensordaten umfassen.

3. Verfahren nach Anspruch 1 oder 2, wobei, dass das intelligente Fahrzeug (100) Löschung der Sensordaten in der ersten ECU auslöst, Folgendes umfasst:
Bestimmen, durch das Steuergerät auf der Grundlage der Markierungsinformationen und eines voreingestellten Datenaufbewahrungszeitraums, dass die Sensordaten in der ersten ECU ablaufen; oder
Erlangen, durch das Steuergerät, einer zweiten Datenlöschanweisung, die durch einen Benutzer ausgelöst wird, wobei die zweite Datenlöschanweisung angibt, die Sensordaten in der ersten ECU zu löschen.

4. Verfahren nach einem der Ansprüche 1 bis 3, wobei die Antwortnachricht Informationen über einen Sensor umfasst und die Informationen über den Sensor durch die erste ECU dazu verwendet werden, eine Kommunikationsverbindung mit dem Sensor herzustellen, so dass die erste ECU die Sensordaten von dem Sensor erlangt.

5. Verfahren nach Anspruch 4, wobei die erste Datenlöschanweisung ferner der ersten ECU angibt, die Kommunikationsverbindung mit dem Sensor zu trennen.

6. Verfahren nach einem der Ansprüche 1 bis 5, wobei das Verfahren vor dem Senden, durch das Steuergerät, einer Antwortnachricht an die erste ECU ferner Folgendes umfasst: Bestimmen, durch das Steuergerät gemäß einer voreingestellten Berechtigungskonfigurationsrichtlinie, dass die erste ECU die Berechtigung hat, auf die Sensordaten zuzugreifen.

7. Verfahren nach einem der Ansprüche 1 bis 6, wobei das Verfahren ferner Folgendes umfasst:
Empfangen (1002), durch das Steuergerät, von Adressinformationen, die durch eine nicht vertrauenswürdige Vorrichtung gesendet werden, wobei die nicht vertrauenswürdige Vorrichtung eine zweite ECU oder einen Server umfasst, die zweite ECU eine nicht vertrauenswürdiges ECU in der Vielzahl von ECUs ist, die Adressinformationen einen Adressraum angeben, der in der nicht vertrauenswürdigen Vorrichtung ist und der dazu verwendet wird, zu übertragende Daten zu speichern, und die Adressinformationen durch die nicht vertrauenswürdige Vorrichtung auf der Grundlage einer Größe der zu übertragenden Daten bestimmt werden;
Erzeugen (1003), durch das Steuergerät, von ersten Datenanmeldeinformationen auf der Grundlage der Adressinformationen und der zu übertragenden Daten, wobei die ersten Datenanmeldeinformationen die zu übertragenden Daten eindeutig angeben;
Senden (1004), durch das Steuergerät, der ersten Datenanmeldeinformationen an die nicht vertrauenswürdige Vorrichtung;
Empfangen (1005), durch das Steuergerät, eines ersten Signaturergebnisses, das durch die nicht vertrauenswürdige Vorrichtung gesendet wird, wobei das erste Signaturergebnis durch Signieren der ersten Datenanmeldeinformationen durch die nicht vertrauenswürdige Vorrichtung erlangt wird; und
Steuern (1006), durch das Steuergerät, der Übertragung der zu übertragenden Daten an die nicht vertrauenswürdige Vorrichtung.

8. Verfahren nach Anspruch 7, wobei die ersten Datenanmeldeinformationen die Adressinformationen und einen oder mehrere der folgenden Werte umfasst: einen Digest-Wert der zu übertragenden Daten, einen Datei-Locator der zu übertragenden Daten und einen Zeitstempel der zu übertragenden Daten.

9. Verfahren nach einem der Ansprüche 1 bis 8, wobei das Verfahren ferner Folgendes umfasst:
Erzeugen, durch das Steuergerät, von zweiten Datenanmeldeinformationen auf der Grundlage der zu löschenden Daten;
Senden, durch das Steuergerät, einer dritten Datenlöschanweisung an eine nicht vertrauenswürdige Vorrichtung, wobei die nicht vertrauenswürdige Vorrichtung eine dritte ECU oder einen Server umfasst, die dritte ECU eine nicht vertrauenswürdige ECU in der Vielzahl von ECUs ist, die dritte Datenlöschanweisung die zweiten Datenanmeldeinformationen umfasst und die dritte Datenlöschanweisung angibt, die zu löschenden Daten zu löschen; und
Erlangen, durch das Steuergerät, eines zweiten Signaturergebnisses, das durch die nicht vertrauenswürdigen Vorrichtung zurückgegeben wird, wobei das zweite Signaturergebnis durch Signieren der zweiten Datenanmeldeinformationen durch den Server erlangt wird und das zweite Signaturergebnis angibt, dass die nicht vertrauenswürdige Vorrichtung die zu löschenden Daten gelöscht hat.

10. Datenverarbeitungsverfahren, wobei das Verfahren auf ein Fahrzeug (100) angewendet wird, das ein Steuergerät und eine Vielzahl von elektronischen Steuereinheiten, ECUs, umfasst, und das Verfahren Folgendes umfasst:
Senden (401), durch eine erste ECU, einer Datenanforderungsnachricht an das Steuergerät, wobei die erste ECU eine beliebige aus der Vielzahl von ECUs ist und die Datenanforderungsnachricht dazu verwendet wird, anzufordern, Sensordaten zu erlangen;
Empfangen (402), durch die erste ECU, einer Antwortnachricht von dem Steuergerät, wobei die Antwortnachricht der ersten ECU angibt, die Sensordaten zu erlangen;
Erlangen (404), durch die erste ECU, der Sensordaten auf der Grundlage der Antwortnachricht; und
wenn das Fahrzeug (100) eine Löschung der Sensordaten in der ersten ECU auslöst, Empfangen, durch die erste ECU, einer ersten Datenlöschanweisung von dem Steuergerät und Löschen der Sensordaten in der ersten ECU auf der Grundlage der ersten Datenlöschanweisung.

11. Verfahren nach Anspruch 10, wobei das Erlangen (404), durch die erste ECU, der Sensordaten auf der Grundlage der Antwortnachricht Folgendes umfasst:
Herstellen, durch die erste ECU auf der Grundlage von Informationen über einen Sensor, einer Kommunikationsverbindung mit dem Sensor, wobei Antwortinformationen die Informationen über den Sensor umfassen; und
Erlangen, durch die erste ECU, der Sensordaten von dem Sensor auf der Grundlage der Kommunikationsverbindung.

12. Verfahren nach Anspruch 11, wobei die erste Datenlöschanweisung ferner der ersten ECU angibt, die Kommunikationsverbindung mit dem Sensor zu trennen.

13. Verfahren nach einem der Ansprüche 10 bis 12, wobei das Verfahren ferner Folgendes umfasst:
wenn die erste ECU eine nicht vertrauenswürdige Vorrichtung ist, Senden (1002), durch die erste ECU, von Adressinformationen an das Steuergerät, wobei die Adressinformationen einen Adressraum angeben, der in der ersten ECU ist und der dazu verwendet wird, zu übertragende Daten zu speichern, und die Adressinformationen durch die erste ECU auf der Grundlage einer Größe der zu übertragenden Daten bestimmt werden;
Empfangen (1004), durch die erste ECU, von ersten Datenanmeldeinformationen, die durch das Steuergerät gesendet werden, wobei die ersten Datenanmeldeinformationen auf der Grundlage der Adressinformationen und der zu übertragenden Daten erzeugt werden;
Signieren, durch die erste ECU, der ersten Datenanmeldeinformationen, um ein erstes Signaturergebnis zu erlangen;
Senden (1005), durch die erste ECU, des ersten Signaturergebnisses an das Steuergerät; und
Empfangen, durch die erste ECU, der zu übertragenden Daten, die durch das Steuergerät übertragen werden.

14. ECU (1500), umfassend einen Speicher und einen Prozessor, wobei der Speicher einen Code speichert, der Prozessor dazu konfiguriert ist, den Code auszuführen, und, wenn der Code ausgeführt wird, die ECU das Verfahren nach einem der Ansprüche 10 bis 13 durchführt.

15. Fahrzeug (100), umfassend ein Steuergerät und eine Vielzahl von ECUs, wobei das Steuergerät separat mit der Vielzahl von ECUs verbunden ist, das Steuergerät einen Speicher und einen Prozessor umfasst, wobei der Speicher einen Code speichert, der Prozessor dazu konfiguriert ist, den Code auszuführen, und, wenn der Code ausgeführt wird, das Steuergerät das Verfahren nach einem der Ansprüche 1 bis 9 durchführt.

## Revendications

1. Procédé de traitement de données, dans lequel le procédé est appliqué à un véhicule (100) comprenant un dispositif de commande et une pluralité d'unités de commande électroniques, ECU, et le procédé comprend :
la réception (401), par le dispositif de commande, d'un message de demande de données à partir d'une première ECU, dans lequel la première ECU est l'une quelconque de la pluralité d'ECU, et le message de demande de données est utilisé pour demander l'obtention de données de capteur ;
l'envoi (402), par le dispositif de commande, d'un message de réponse à la première ECU, dans lequel le message de réponse indique à la première ECU d'obtenir les données de capteur ;
la génération (403), par le dispositif de commande, d'informations de marque sur la base du message de demande de données, dans lequel les informations de marque enregistrent des informations de demande pour les données de capteur ; et
si le véhicule (100) déclenche la suppression des données de capteur dans la première ECU, l'envoi (405), par le dispositif de commande, d'une première instruction de suppression de données à la première ECU sur la base des informations de marque, dans lequel la première instruction de suppression de données indique à la première ECU de supprimer les données de capteur.

2. Procédé selon la revendication 1, dans lequel les informations de demande pour les données de capteur comprennent un demandeur des données de capteur, une heure de demande des données de capteur et le contenu des données de capteur.

3. Procédé selon la revendication 1 ou 2, dans lequel le fait que le véhicule intelligent (100) déclenche la suppression des données de capteur dans la première ECU comprend :
la détermination, par le dispositif de commande sur la base des informations de marque et d'une période de conservation de données prédéfinie, que les données de capteur dans la première ECU expirent ; ou
l'obtention, par le dispositif de commande, d'une deuxième instruction de suppression de données déclenchée par un utilisateur, dans lequel la deuxième instruction de suppression de données indique de supprimer les données de capteur dans la première ECU.

4. Procédé selon l'une quelconque des revendications 1 à 3, dans lequel le message de réponse comprend des informations sur un capteur, et les informations sur le capteur sont utilisées par la première ECU pour établir une connexion de communication avec le capteur, de sorte que la première ECU obtient les données de capteur à partir du capteur.

5. Procédé selon la revendication 4, dans lequel la première instruction de suppression de données indique également à la première ECU de déconnecter la connexion de communication avec le capteur.

6. Procédé selon l'une quelconque des revendications 1 à 5, dans lequel, avant l'envoi, par le dispositif de commande, d'un message de réponse à la première ECU, le procédé comprend également :
la détermination, par le dispositif de commande selon une politique de configuration d'autorisation prédéfinie, que la première ECU a l'autorisation d'accéder aux données de capteur.

7. Procédé selon l'une quelconque des revendications 1 à 6, dans lequel le procédé comprend également :
la réception (1002), par le dispositif de commande, d'informations d'adresse envoyées par un dispositif non fiable, dans lequel le dispositif non fiable comprend une deuxième ECU ou un serveur, la deuxième ECU étant une ECU non fiable dans la pluralité d'ECU, les informations d'adresse indiquent un espace d'adresse qui se trouve dans le dispositif non fiable et qui est utilisé pour stocker des données à transmettre, et les informations d'adresse sont déterminées par le dispositif non fiable sur la base de la taille des données à transmettre ;
la génération (1003), par le dispositif de commande, d'un premier identifiant de données sur la base des informations d'adresse et des données à transmettre, dans lequel le premier identifiant de données indique de manière unique les données à transmettre ;
l'envoi (1004), par le dispositif de commande, du premier identifiant de données au dispositif non fiable ;
la réception (1005), par le dispositif de commande, d'un premier résultat de signature envoyé par le dispositif non fiable, dans lequel le premier résultat de signature est obtenu en signant le premier identifiant de données par le dispositif non fiable ; et
la commande (1006), par le dispositif de commande, de la transmission des données à transmettre au dispositif non fiable.

8. Procédé selon la revendication 7, dans lequel le premier identifiant de données comprend les informations d'adresse et un ou plusieurs d'une valeur de résumé des données à transmettre, d'un localisateur de fichier des données à transmettre et d'un horodatage des données à transmettre.

9. Procédé selon l'une quelconque des revendications 1 à 8, dans lequel le procédé comprend également :
la génération, par le dispositif de commande, d'un second identifiant de données sur la base de données à supprimer ; l'envoi, par le dispositif de commande, d'une troisième instruction de suppression de données à un dispositif non fiable, dans lequel le dispositif non fiable comprend une troisième ECU ou un serveur, la troisième ECU est une ECU non fiable dans la pluralité d'ECU, la troisième instruction de suppression de données comprend le second identifiant de données, et la troisième instruction de suppression de données indique de supprimer les données à supprimer ; et
l'obtention, par le dispositif de commande, d'un second résultat de signature renvoyé par le dispositif non fiable, dans lequel le second résultat de signature est obtenu en signant le second identifiant de données par le serveur, et le second résultat de signature indique que le dispositif non fiable a supprimé les données à supprimer.

10. Procédé de traitement de données, dans lequel le procédé est appliqué à un véhicule (100) comprenant un dispositif de commande et une pluralité d'unités de commande électroniques (ECU), et le procédé comprend :
l'envoi (401), par une première ECU, d'un message de demande de données au dispositif de commande, dans lequel la première ECU est l'une quelconque de la pluralité d'ECU, et le message de demande de données est utilisé pour demander l'obtention de données de capteur ;
la réception (402), par la première ECU, d'un message de réponse du dispositif de commande, dans lequel le message de réponse indique à la première ECU d'obtenir les données de capteur ; l'obtention (404), par la première ECU, des données de capteur sur la base du message de réponse ; et
si le véhicule (100) déclenche la suppression des données de capteur dans la première ECU, la réception, par la première ECU, d'une première instruction de suppression de données à partir du dispositif de commande, et la suppression des données de capteur dans la première ECU sur la base de la première instruction de suppression de données.

11. Procédé selon la revendication 10, dans lequel l'obtention (404), par la première ECU, des données de capteur sur la base du message de réponse comprend :
l'établissement, par la première ECU sur la base d'informations sur un capteur, d'une connexion de communication avec le capteur, dans lequel les informations de réponse comprennent les informations sur le capteur ; et
l'obtention, par la première ECU, des données de capteur à partir du capteur sur la base de la connexion de communication.

12. Procédé selon la revendication 11, dans lequel la première instruction de suppression de données indique également à la première ECU de déconnecter la connexion de communication avec le capteur.

13. Procédé selon l'une quelconque des revendications 10 à 12, dans lequel le procédé comprend également :
si la première ECU est un dispositif non fiable, l'envoi (1002), par la première ECU, d'informations d'adresse au dispositif de commande, dans lequel les informations d'adresse indiquent un espace d'adresse qui se trouve dans la première ECU et qui est utilisé pour stocker des données à transmettre, et les informations d'adresse sont déterminées par la première ECU sur la base d'une taille des données à transmettre ;
la réception (1004), par la première ECU, d'un premier identifiant de données envoyé par le dispositif de commande, dans lequel le premier identifiant de données est généré sur la base des informations d'adresse et des données à transmettre ; la signature, par la première ECU, du premier identifiant de données pour obtenir un premier résultat de signature ;
l'envoi (1005), par la première ECU, du premier résultat de signature au dispositif de commande ; et
la réception, par la première ECU, des données à transmettre transmises par le dispositif de commande.

14. ECU (1500), comprenant une mémoire et un processeur, dans laquelle la mémoire stocke un code, le processeur est configuré pour exécuter le code, et lorsque le code est exécuté, l'ECU réalise le procédé selon l'une quelconque des revendications 10 à 13.

15. Véhicule (100), comprenant un dispositif de commande et une pluralité d'ECU, dans lequel le dispositif de commande est connecté séparément à la pluralité d'ECU, le dispositif de commande comprend une mémoire et un processeur, dans lequel la mémoire stocke un code, le processeur est configuré pour exécuter le code, et lorsque le code est exécuté, le dispositif de commande réalise le procédé selon l'une quelconque des revendications 1 à 9.
